# EUROPÄISCHE PATENTSCHRIFT

(11) **EP 3 015 037 B1**
(45) Veröffentlichungstag und Bekanntmachung des Hinweises auf die Patenterteilung: **15.03.2017**
(21) Anmeldenummer: 15189345.0
(22) Anmeldetag: 12.10.2015
(51) Int. Cl.: A47J 43/07

(54) **KÜCHENMASCHINE MIT VERRIEGELUNGSEINRICHTUNG**
KITCHEN APPLIANCE WITH LOCKING DEVICE
ROBOT MÉNAGER ET DISPOSITIF DE VERROUILLAGE

(30) Priorität: 30.10.2014 DE 102014115787
(43) Veröffentlichungstag der Anmeldung: 04.05.2016
(73) Patentinhaber: Vorwerk & Co. Interholding GmbH, 42275 Wuppertal (DE)
(72) Erfinder: Zils, Jürgen, 51399 Burscheid (DE); Van der Gaag, Velina, 42289 Wuppertal (DE); Degen Braun, Barbara, 42327 Wuppertal (DE)
(74) Vertreter: Müller, Enno

(56) Entgegenhaltungen:
- WO-A1-03/075727
- DE-A1-102013 103 297

## Beschreibung

Die Erfindung betrifft eine Küchenmaschine, insbesondere ein Mixgerät, mit einem Gehäuse, an welchem ein Gefäß anordenbar ist, wobei das Gehäuse einen Gefäßaufnahmebereich aufweist, in welchen das Gefäß einsetzbar ist, wobei der Gefäßaufnahmebereich zumindest in einem Teilbereich formkorrespondierend zu dem Gefäß so ausgebildet ist, dass das Gefäß im Zuge des Einsetzens in den Gefäßaufnahmebereich sowohl in Bezug auf eine vertikale Richtung als auch in Bezug auf eine Umfangsrichtung des Gefäßes ausrichtbar ist.

Küchenmaschinen der in Rede stehenden Art sind bekannt. Diese weisen beispielsweise ein abnehmbares Gefäß auf, in welchem beispielsweise ein Rührwerk zur Zubereitung von Speisen angeordnet ist. Letzteres wird über einen küchenmaschinenseitigen Elektromotor angetrieben, wozu der Gefäßaufnahmebereich und das Gefäß korrespondierende Kupplungselemente aufweisen. Darüber hinaus ist es bekannt, eine Heizeinrichtung für das Gefäß vorzusehen. Dafür weist der Boden des Gefäßes beispielsweise ein elektrisch ansteuerbares Heizelement auf. Darüber hinaus können an dem Gefäß ebenfalls elektrische Messeinrichtungen zur Messung einer Temperatur, eines Druckes oder ähnlichem vorgesehen sein.

Das Gefäß ist mittels eines Deckels verschließbar. Zudem kann die Küchenmaschine eine Verriegelungseinrichtung zur Verriegelung des Gefäßes mit dem Deckel aufweisen, welche beispielsweise an dem Deckel angreifende Verriegelungswalzen umfasst.

Um das Gefäß relativ zu dem Gehäuse so auszurichten, dass eine Verriegelung des Gefäßes mit dem Deckel möglich ist oder dass die elektrischen Kontakte des Gefäßes die elektrischen Kontakte des Gefäßaufnahmebereiches kontaktieren, ist es im Stand der Technik bekannt, das Gehäuse der Küchenmaschine so auszubilden, dass ein Nutzer der Küchenmaschine durch die Form des Gehäuses dabei unterstützt wird, das Gefäß in die für eine elektrische Kontaktierung benötigte Position zu bringen. Die Druckschrift WO 2003/075727 A1 offenbart beispielsweise eine besondere geometrische Form des Gehäuses der Küchenmaschine, welches das Rührgefäß teilweise umfangsmäßig umgreift. Durch das Zusammenwirken der Gehäuseform und der Gewichtskraft des Gefäßes wird das Gefäß bei einem Einsetzen in den Gefäßaufnahmebereich so gedreht, dass dieses eine bestimmte Position innerhalb des Gefäßaufnahmebereiches einnimmt.

Die Druckschrift DE 10 2013 103297 A1 (siehe Fig. 5, 8) offenbart ein Mixgerät, mit einem Gehäuse, an welchem ein Gefäss anordenbar ist. Der Gefässaufnahmebereich ist als Zylinder ausgebildet, der in Umfangsrichtung halbseitig offen ausgebildet ist.

Ausgehend von dem vorgenannten Stand der Technik ist es Aufgabe der Erfindung, eine Küchenmaschine dieser Art weiter zu entwickeln, insbesondere in Hinblick auf eine komfortable Verwendung.

Zur Lösung der vorgenannten Aufgabe schlägt die Erfindung vor, dass der Gefäßaufnahmebereich im Wesentlichen als ein Zylinder ausgebildet ist, dessen Zylindermantel eine Mantelaussparung aufweist, so dass der Zylinder in Umfangsrichtung im Wesentlichen halbseitig offen ausgebildet ist, wobei an dem Gehäuse eine mindestens einen schwenkbaren Flügel oder mindestens ein in Umfangsrichtung verschiebbares Schiebeelement aufweisende Verschlusseinrichtung angeordnet ist, wobei der schwenkbare Flügel formkorrespondierend in die Mantelaussparung schwenkbar ist oder wobei das Schiebeelement formkorrespondierend in die Mantelaussparung schiebbar ist.

Gemäß der Erfindung ist das Gehäuse der Küchenmaschine, insbesondere der Gefäßaufnahmebereich, zylinderförmig ausgebildet, wobei der Zylindermantel im Wesentlichen über die Hälfte seines Umfangs eine Materialaussparung aufweist, welche dazu genutzt werden kann, das Gefäß bequem aus einer horizontalen Richtung in den Gefäßaufnahmebereich einzusetzen. Der Nutzer der Küchenmaschine muss das Gefäß somit nicht mehr über die Küchenmaschine heben und das Gefäß von oben in den Gefäßaufnahmebereich einsetzen. In Kombination mit der die Mantelaussparung verschließenden Verschlusseinrichtung ist es möglich, den Gefäßaufnahmebereich in Umfangsrichtung vollständig zu schließen, so dass das Gefäß zumindest in Umfangsrichtung vollständig von dem Gefäßaufnahmebereich umgeben ist und somit gegenüber der Umgebung schallisoliert ist. Vorteilhaft kann es dabei auch vorgesehen sein, dass der Zylinder eine geschlossene Stirnseite aufweist, so dass die Schallisolierung zusätzlich verbessert ist. Das Verschließen der Mantelaussparung erfolgt besonders nutzerfreundlich durch das Verschwenken eines oder mehrerer Flügel in die Mantelaussparung oder das Einschieben eines oder mehrerer Schiebeelemente in die Mantelaussparung. Durch die Verwendung von schwenkbaren Flügeln oder verschiebbaren Schiebeelementen kann der Nutzer die Mantelaussparung mit üblichen Handgriffen verschließen, welche er beispielsweise von Türflügeln oder Schiebetüren kennt. Insofern ist die Küchenmaschine in dieser Beziehung besonders intuitiv nutzbar.

Es wird vorgeschlagen, dass die Verschlusseinrichtung einen um eine vertikale Drehachse schwenkbaren Flügel oder zwei um jeweils eine vertikale Drehachse schwenkbare Flügel aufweist. Die Mantelaussparung kann somit durch nur einen Flügel oder auch durch zwei Flügel geschlossen werden, welche - wie beispielsweise von Haustüren bekannt - um eine vertikale Drehachse schwenkbar sind.

Es ist vorgesehen, dass in Bezug auf einen in die Mantelaussparung geschwenkten Zustand des Flügels ein Spalt zwischen dem Flügel und dem Gefäßaufnahmebereich oder zwischen zwei Flügeln ausgebildet ist, in welchem Spalt ein Teilbereich, insbesondere ein Griffelement, des Gefäßes anordenbar ist. Der oder die Flügel sind damit erfindungsgemäß so ausgestaltet, dass diese die Mantelaussparung im geschlossenen Zustand nicht vollständig verschließen, sondern einen Spalt auszubilden, in welchem ein Teilbereich des Gefäßes anordenbar ist. Der Teilbereich des Gefäßes greift in diesen Spalt hinein, so dass die Mantelaussparung nicht nur durch die Flügel sondern auch durch den Teilbereich des Gefäßes verschlossen wird. Der Teilbereich des Gefäßes kann insbesondere ein Griffelement sein, welches ohnehin radial nach außen weisend an dem Gefäß angeordnet ist. Dieser erfindungsgemäßen Ausführung liegt dabei die Idee zugrunde, dass der Teilbereich des Gefäßes in eine durch den Zylinderumfang gegebene Teilkreisbahn eingreift und somit zum teilweisen Verschließen der Mantelaussparung genutzt werden kann. Gleichzeitig ergibt sich dadurch die Möglichkeit der Positionierung des Gefäßes innerhalb des Gefäßaufnahmebereiches, da der Teilbereich des Gefäßes, d. h. beispielsweise das Griffelement, in die Mantelaussparung hineinragt, welche der Flügel zu verschließen sucht. Bei einem Verschwenken des Flügels in die Mantelaussparung wird der Flügel im Bereich der Teilkreisbahn verlagert und gerät dabei in Kontakt mit dem in die Teilkreisbahn ragenden Teilbereich des Gefäßes. Dadurch kann das Gefäß in eine gewünschte Position verlagert und dort verriegelt werden. Der Teilbereich des Gefäßes gleitet an der Innenseite des Flügels entlang bis der Flügel seine Endstellung einnimmt und das Griffelement in den zwischen dem Flügel und dem Gefäßaufnahmebereich oder zwischen zwei Flügeln ausgebildeten Spalt eingreift.

Des Weiteren wird in Bezug auf eine Ausführung mit einem oder mehreren Schiebeelementen vorgeschlagen, dass in Bezug auf einen in die Mantelaussparung geschobenen Zustand des Schiebeelementes ein Spalt zwischen dem Schiebeelement und dem Gefäßaufnahmebereich oder zwischen zwei Schiebeelementen ausgebildet ist, in welchem Spalt ein Teilbereich, insbesondere ein Griffelement, des Gefäßes anordenbar ist.

Alternativ zu den vorgenannten Ausführungsformen wird vorgeschlagen, dass die Verschlusseinrichtung einen um eine horizontale Drehachse schwenkbaren Flügel aufweist. Dabei wird die Mantelaussparung nach der Art einer Spülmaschinen- oder Backofentür verschlossen.

Es ist vorgesehen, dass der um eine horizontale Drehachse schwenkbare Flügel eine Aussparung aufweist, in welcher ein Teilbereich, insbesondere ein Griffelement, des Gefäßes anordenbar ist. Die Aussparung kann dabei nach der Art eines Spaltes ausgebildet sein, oder nach der Art einer Nut, so dass der Teilbereich des Gefäßes den Flügel nicht vollständig durchsetzt. Da der Flügel auch in diesem Fall Teil des Zylindermantels ist, ist die Innenseite des Flügels vorteilhaft konkav ausgebildet und dient als Gleitfläche für den Teilbereich (Griffelement) des Gefäßes. Bei einem Verschwenken des Flügels in Richtung der Mantelaussparung gleitet der Teilbereich des Gefäßes entlang der Innenwandung des Flügels, bis es zu einem Eingreifen des Teilbereiches des Gefäßes in die Aussparung kommt. In dieser Stellung befindet sich der Flügel formkorrespondierend in der Mantelaussparung und dient sowohl der Schallisolierung als auch der Ausrichtung des Gefäßes relativ zu dem Gefäßaufnahmebereich, beispielsweise um das Gefäß mit einem Deckel verriegeln zu können.

In Verbindung mit jeder der vorgenannten Ausführungsvarianten kann es vorgesehen sein, dass die Verschlusseinrichtung in Wirkung mit einer Hebeeinrichtung steht oder eine Hebeeinrichtung aufweist, welche ausgebildet ist, ein in den Gefäßaufnahmebereich eingesetztes Gefäß bei Betätigung der Verschlusseinrichtung entgegen einer Einsetzrichtung anzuheben und/oder ein in den Gefäßaufnahmebereich einzusetzendes Gefäß in Einsetzrichtung abzusenken.

Die Hebeeinrichtung unterstützt den Nutzer der Küchenmaschine beim Einsetzen oder Entnehmen des Gefäßes in bzw. aus dem Gefäßaufnahmebereich. Dabei ist es vorgesehen, dass zeitgleich mit der Betätigung der Verschlusseinrichtung, d. h. dem Verschwenken eines Flügels oder dem Verschieben eines Schiebeelementes automatisch ein Anheben bzw. Absenken des Gefäßes erfolgt. Dabei kann die Hebeeinrichtung ein Teil der Verschlusseinrichtung sein oder die Hebeeinrichtung kann in Wirkverbindung mit der Verschlusseinrichtung stehen, wobei ein Teilbereich der Hebeeinrichtung auf einen Teilbereich der Verschlusseinrichtung wirkt. Im erstgenannten Fall können die Hebeeinrichtung und die Verschlusseinrichtung einteilig ausgebildet sein. Es ist nicht erforderlich, dass der Nutzer der Küchenmaschine einen separaten Handgriff durchführt, um die Hebeeinrichtung zu betätigen. Vielmehr erfolgt dies automatisch mit der Betätigung der Verschlusseinrichtung.

Gemäß einer Variante der Erfindung weist die Hebeeinrichtung eine in einem Bodenbereich des Gefäßaufnahmebereiches angeordnete Hebebühne auf, welche ein Eingreifelement aufweist, das in eine gewindeartige Führung der Verschlusseinrichtung eingreift. Beispielsweise kann die Hebebühne einen radial nach außen weisenden Bolzen aufweisen, welcher in eine korrespondierende gewindeartige Führung des Flügels oder des Schiebeelementes eingreift. Sofern die Verschlusseinrichtung beispielsweise ein Schiebeelement aufweist, kann die gewindeartige Führung eine in Umfangsrichtung ansteigende Nut sein, entlang welcher der Bolzen bei einer Verschiebung des Schiebeelementes in die Mantelaussparung verschoben wird. Dabei kommt es bei einer Verschiebung des Schiebeelementes in Richtung der Mantelaussparung zu einer Absenkung der Hebebühne, während es bei einer Verschiebung des Schiebeelementes aus der Mantelaussparung heraus zu einem Anheben der Hebebühne kommt. Das Absenken bzw. Anheben der Hebebühne erfolgt folglich durch ein Gleiten des Bolzens entlang einer sinkenden bzw. steigenden Rampe.

Gemäß einer zweiten Ausführungsvariante wird vorgeschlagen, dass die Verschlusseinrichtung ein Hebeelement aufweist, welches so in Wirkverbindung mit einer an dem Gehäuse ausgebildeten Rampe steht, dass das Hebeelement bei einer Betätigung der Verschlusseinrichtung entlang der Rampe bewegbar ist. Gemäß dieser Ausgestaltung ist an dem Gehäuse der Küchenmaschine eine Rampe ausgebildet, welche eine steigende bzw. fallende Flanke zur Verfügung stellt. Auf dieser Rampe gleitet ein Hebeelement der Verschlusseinrichtung, das in Verbindung mit dem Gefäß steht. Das Gefäß kann beispielsweise auf einer Fläche des Hebeelementes angeordnet sein. Bei einer Betätigung der Verschlusseinrichtung, d. h. einem Verschwenken des Flügels oder einem Verschieben des Schiebeelementes kommt es zu einem Gleiten des Hebeelementes entlang der Rampe, wodurch das Hebeelement bei einer Bewegung in Richtung der Mantelaussparung die Rampe herabgleitet, während es bei einer Bewegung von der Mantelaussparung weg die Rampe hinaufgleitet und - mitsamt des daran angeordneten Gefäßes - angehoben wird.

Auch gemäß dieser Ausführungsvariante hat der Nutzer der Küchenmaschine lediglich einen Handgriff zu tätigen, um zum einen die Mantelaussparung zu verschließen und das Gefäß in den Gefäßaufnahmebereich abzusenken oder zum anderen die Mantelaussparung zu öffnen und das Gefäß aus dem Gefäßaufnahmebereich herauszuheben.

Vorteilhaft wird vorgeschlagen, dass die Verschlusseinrichtung in Wirkverbindung mit einer Verriegelungseinrichtung zur Verriegelung des Gefäßes mit einem Deckel steht oder Teil einer Verriegelungseinrichtung ist. Die Verriegelungseinrichtung kann vorteilhaft Verriegelungselemente zur Anordnung an dem Deckel aufweisen. Gemäß dieser Ausgestaltung kann der Flügel bzw. das Schiebeelement ein Verriegelungselement aufweisen, welches im in die Mantelaussparung verschwenkten bzw. verschobenen Zustand des Flügels/des Schiebeelementes über das Gefäß bzw. den auf dem Gefäß angeordneten Deckel greift und insbesondere in Verbindung mit der zuvor genannten Hebeeinrichtung auf den Deckel abgesenkt wird, um diesen fest mit dem Gefäß zu verriegeln. Die Verriegelungseinrichtung kann beispielsweise Hakenelemente aufweisen, welche ausgehend von dem Zylindermantel radial nach innen weisen.

Schließlich wird eine Küchenmaschine, insbesondere ein Mixgerät, mit einem Gehäuse, an welchem ein Gefäß anordenbar ist, vorgeschlagen, wobei das Gehäuse einen Gefäßaufnahmebereich aufweist, in welchen das Gefäß einsetzbar ist, wobei der Gefäßaufnahmebereich zumindest in einem Teilbereich formkorrespondierend zu dem Gefäß so ausgebildet ist, dass das Gefäß im Zuge des Einsetzens in den Gefäßaufnahmebereich sowohl in Bezug auf eine vertikale Richtung als auch in Bezug auf eine Umfangsrichtung des Gefäßes ausrichtbar ist, wobei der Gefäßaufnahmebereich im Wesentlichen als ein Zylinder ausgebildet ist, dessen Zylindermantel eine Mantelaussparung aufweist, so dass der Zylinder in Umfangsrichtung im Wesentlichen halbseitig offen ausgebildet ist, wobei das Gefäß einen formkorrespondierend zu der Mantelaussparung ausgebildeten Eingriffteilbereich aufweist, welcher eine größere Materialstärke aufweist als die übrigen Teilbereiche des Gefäßes in Umfangsrichtung, wobei der Eingriffteilbereich die Mantelaussparung im eingesetzten Zustand des Gefäßes verschließt.

Gemäß dieser Ausführungsvariante wird die Mantelaussparung mittels eines Eingriffteilbereiches des Gefäßes verschlossen, welcher Eingriffteilbereich an dem Gefäß ausgebildet ist. Der Eingriffteilbereich weist eine größere Materialstärke auf als die übrigen Teilbereiche des Gefäßes in Umfangsrichtung, so dass das Gefäß in dem Eingriffteilbereich eine bessere Schallisolierung bewirkt als in den übrigen Bereichen. Es ist nicht notwendig, zur Erreichung einer optimalen Schallisolierung eine gesonderte Verschlusseinrichtung an dem Gehäuse vorzusehen. Durch die größere Materialstärke des Eingriffteilbereiches ragt die Außenwandung des Gefäßes in die Umfangskreisbahn des zylinderförmigen Gefäßaufnahmebereiches hinein und verschließt diesen formkorrespondierend. Vorteilhaft weist der Eingriffteilbereich zum komfortablen Einsetzen des Gefäßes in den Gefäßaufnahmebereich einen Teilbereich auf, der nach der Art einer Rampe ausgebildet ist. Diese Rampe ist geeignet, an einem korrespondierend ausgebildeten Teilbereich des Gefäßaufnahmebereiches entlang zu gleiten bis das Gefäß die in vertikaler Richtung tiefste Position innerhalb des Gefäßaufnahmebereiches erreicht hat. Da der Eingriffteilbereich vorteilhaft nicht über den gesamten Umfang des Gefäßes ausgebildet ist, erfüllt dieser gleichzeitig die Funktion der relativen Positionierung des Gefäßes in Umfangsrichtung. Insofern ist ebenfalls sichergestellt, dass das Gefäß stets eine bestimmte Orientierung innerhalb der Küchenmaschine aufweist, beispielsweise "Gefäßgriff in Richtung Nutzer". Neben der Ausbildung des Eingriffteilbereiches mit einer erhöhten Materialstärke ist es ebenfalls möglich, den Eingriffteilbereich mit einem Material auszubilden, welches einen höheren Schalldämpfungsgrad aufweist als das Material in den übrigen Teilbereichen des Gefäßes.

Es wird vorgeschlagen, dass die Küchenmaschine eine Verriegelungseinrichtung zur Verriegelung des Gefäßes mit einem Deckel aufweist, wobei die Verriegelungseinrichtung einen an dem Gehäuse angeordneten, um eine horizontale Achse schwenkbaren Verriegelungsbügel aufweist, welcher im verriegelten Zustand einen Teilbereich des Deckels kontaktiert. Die Verriegelungseinrichtung dient zur Verriegelung des Gefäßes mit einem Deckel. Der Verriegelungsbügel kann an einem von der Mantelaussparung abgewandten Umfangsteilbereich des Gefäßaufnahmebereiches angeordnet sein, so dass dieser in Bezug auf den Verriegelungszustand über das Gefäß hinweggeschwenkt wird und in einen Verschluss einrastet, welcher im Bereich der Mantelaussparung angeordnet ist. Der Verschluss kann dabei beispielsweise ein Schnappverschluss oder ähnliches sein.

Es wird vorgeschlagen, dass das Gefäß und der Gefäßaufnahmebereich elektrische Kontakte zum Herstellen einer elektrischen Verbindung zwischen dem Gefäß und der Küchenmaschine aufweisen, wobei das Gefäß im Zuge des Einsetzens in den Gefäßaufnahmebereich relativ zu dem Gehäuse so ausrichtbar ist, dass die elektrischen Kontakte des Gefäßes und die elektrischen Kontakte des Gefäßaufnahmebereiches einander kontaktieren. Gemäß dieser Ausführungsform wird die erfindungsgemäße relative Orientierung des Gefäßes in Umfangsrichtung dazu genutzt, die elektrischen Kontakte des Gefäßes und des Gefäßaufnahmebereiches so zueinander auszurichten, dass eine elektrische Verbindung zwischen dem Gefäß und der Küchenmaschine hergestellt werden kann. Dadurch wird das Einsetzen des Gefäßes in den Gefäßaufnahmebereich für den Nutzer besonders komfortabel, da er nicht mehr darauf achten muss, ob das Gefäß in einer bestimmten Orientierung zu dem Gefäßaufnahmebereich steht. Vielmehr erfolgt die Positionierung des Gefäßes und damit auch die Positionierung der elektrischen Kontakte mittels der zuvor erläuterten Formkorrespondenz des Gefäßes und des Gefäßaufnahmebereiches.

Im Folgenden wird die Erfindung anhand von Ausführungsbeispielen näher erläutert. Es zeigen:
Figuren 1 bis 7 eine Küchenmaschine gemäß einer ersten Ausführungsform der Erfindung, nämlich:
   - Figur 1:: eine perspektivische Ansicht der Küchenmaschine,
   - Figur 2:: eine Frontalansicht der Küchenmaschine,
   - Figur 3:: eine Draufsicht der Küchenmaschine,
   - Figur 4:: eine Explosionsdarstellung der Küchenmaschine,
   - Figur 5:: einen vertikalen Querschnitt der Küchenmaschine,
   - Figur 6:: eine Draufsicht auf die Küchenmaschine mit einem geöffneten Gefäßaufnahmebereich,
   - Figur 7:: eine Frontalansicht der Küchenmaschine mit einem geöffneten Gefäßaufnahmebereich;
Figuren 8 bis 14 eine Küchenmaschine gemäß einer zweiten Ausführungsform, nämlich:

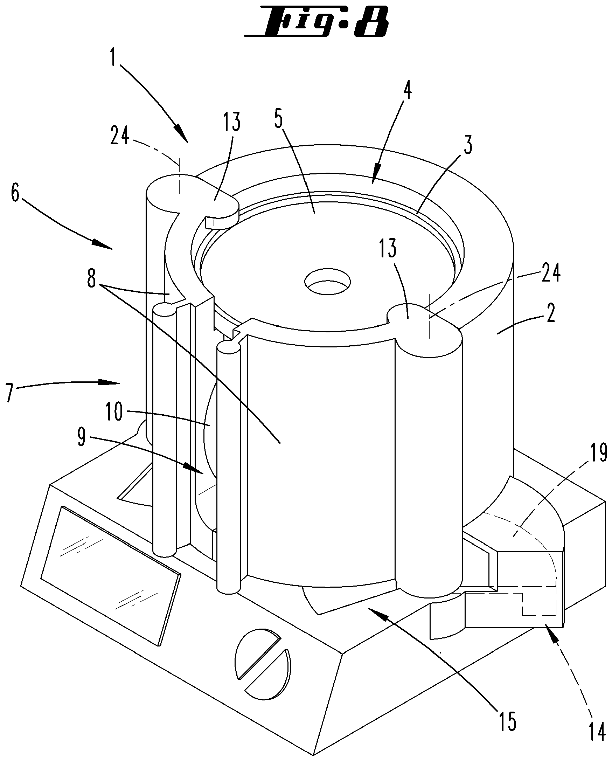

   - Figur 8:: eine perspektivische Ansicht der Küchenmaschine,

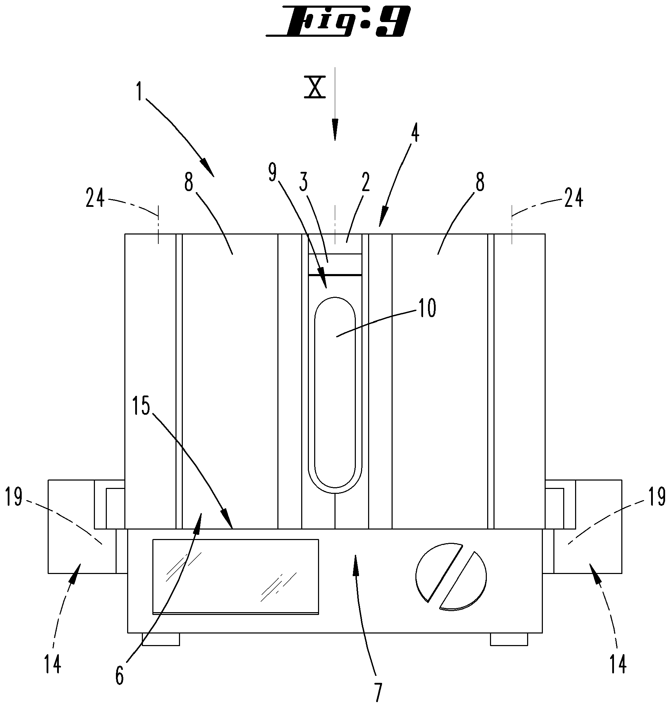

   - Figur 9:: eine Frontalansicht der Küchenmaschine,

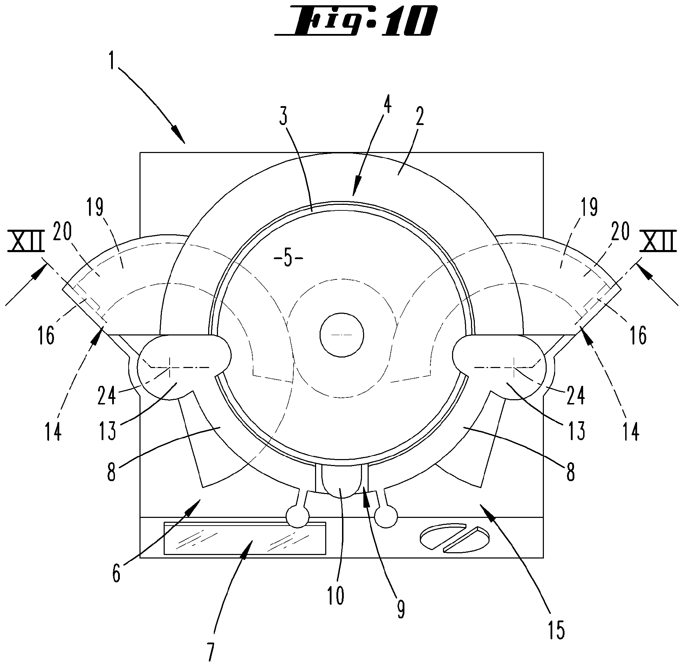

   - Figur 10:: eine Draufsicht der Küchenmaschine,

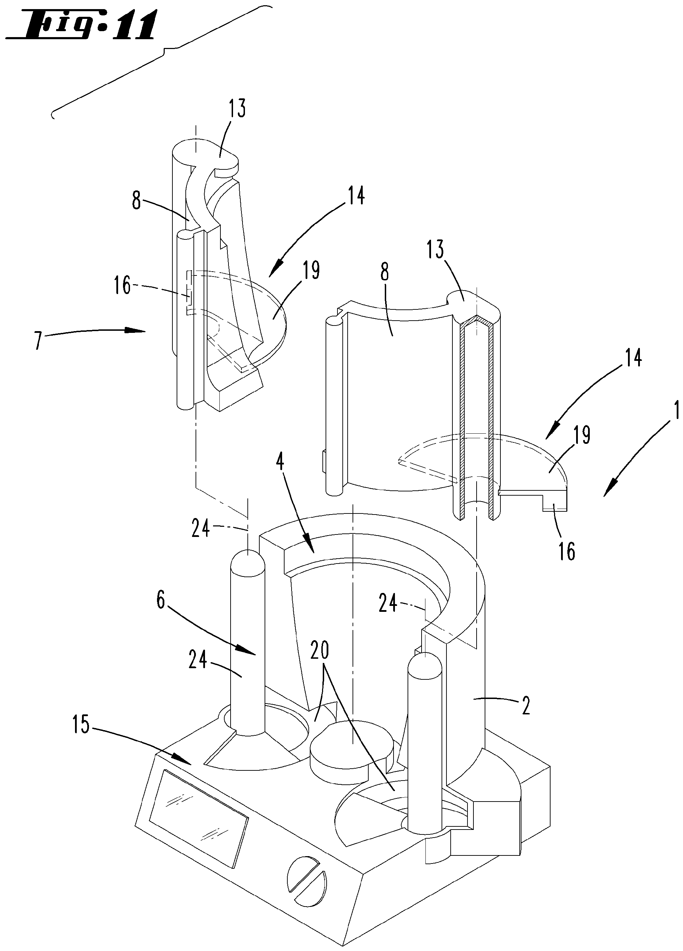

   - Figur 11:: eine Explosionsdarstellung der Küchenmaschine,

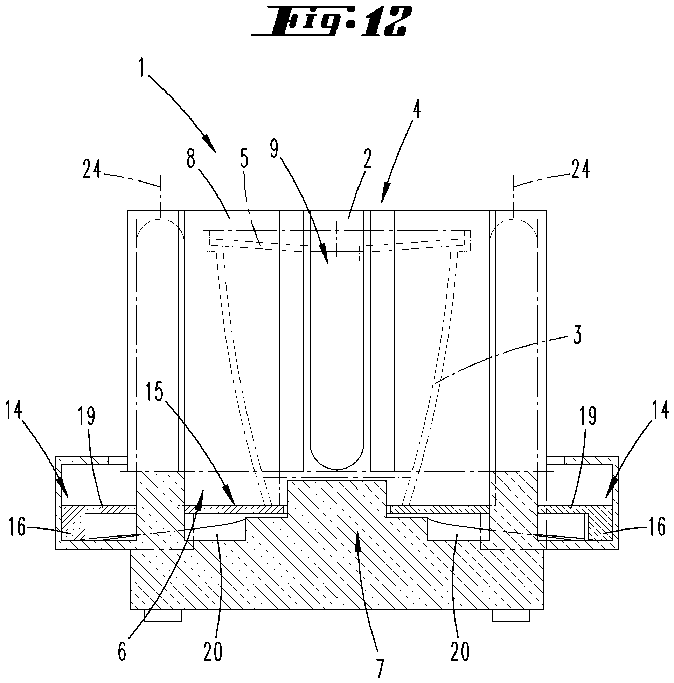

   - Figur 12:: einen vertikalen Querschnitt der Küchenmaschine,

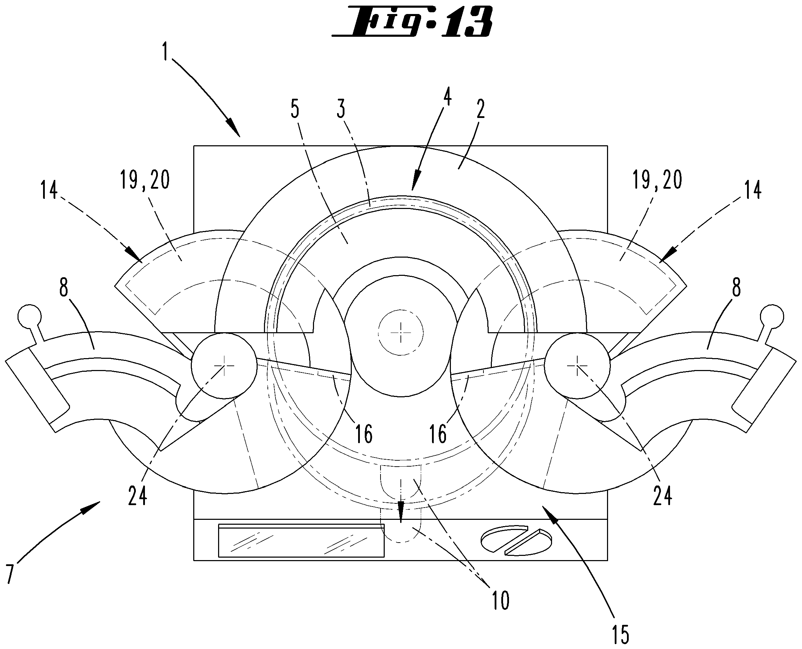

   - Figur 13:: eine Draufsicht auf die Küchenmaschine mit einem geöffneten Gefäßaufnahmebereich,

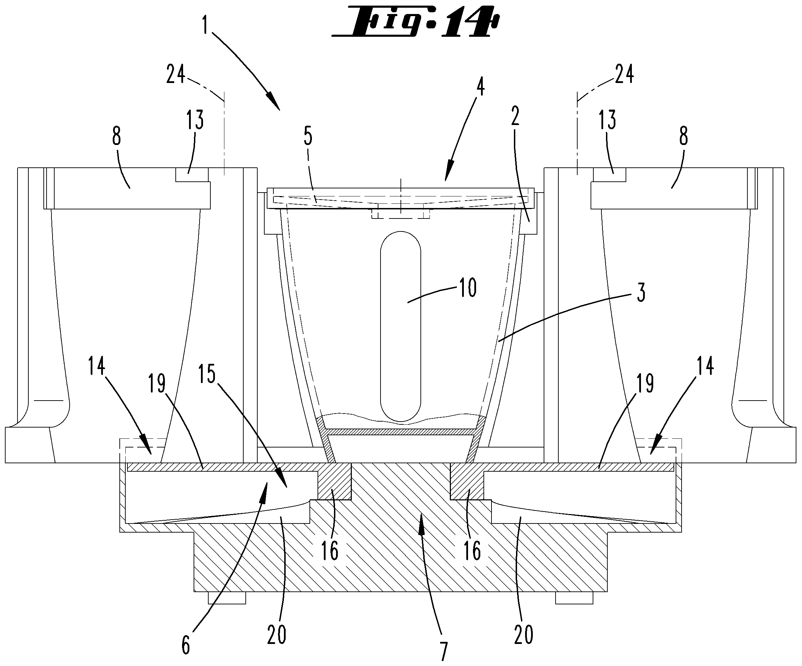

   - Figur 14:: einen vertikalen Querschnitt der Küchenmaschine mit einem geöffneten Gefäßaufnahmebereich;

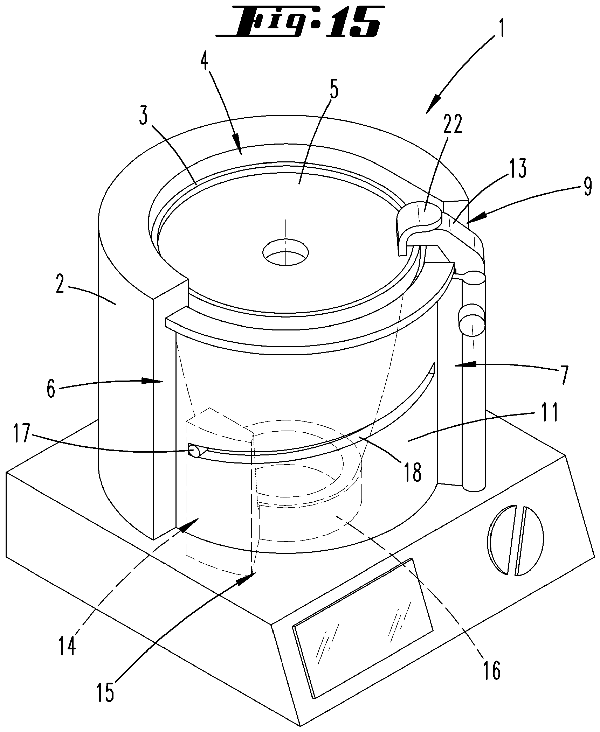

Figuren 15 bis 21 eine Küchenmaschine gemäß einer dritten Ausführungsform, nämlich:
   - Figur 15:: eine perspektivische Ansicht der Küchenmaschine,

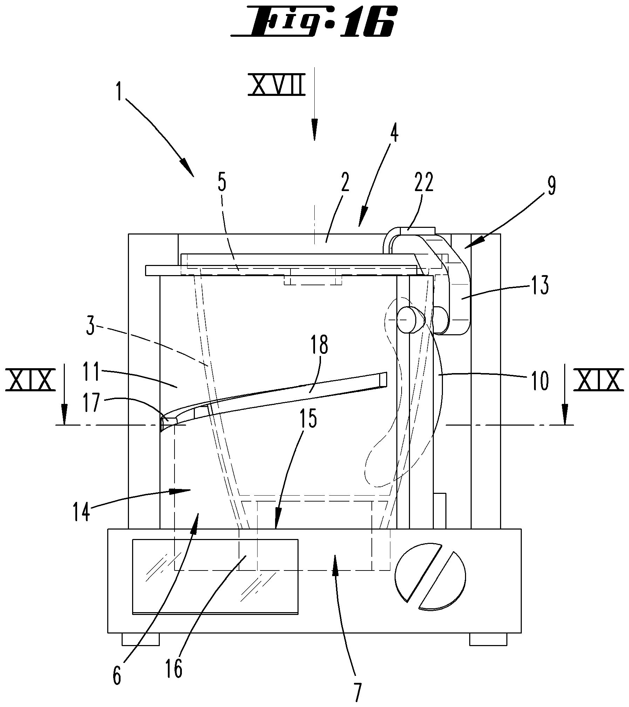

   - Figur 16:: eine Frontalansicht der Küchenmaschine,

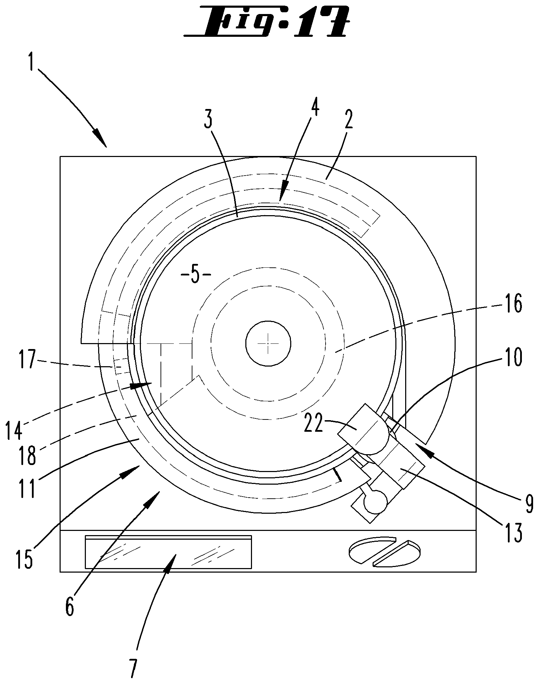

   - Figur 17:: eine Draufsicht der Küchenmaschine,

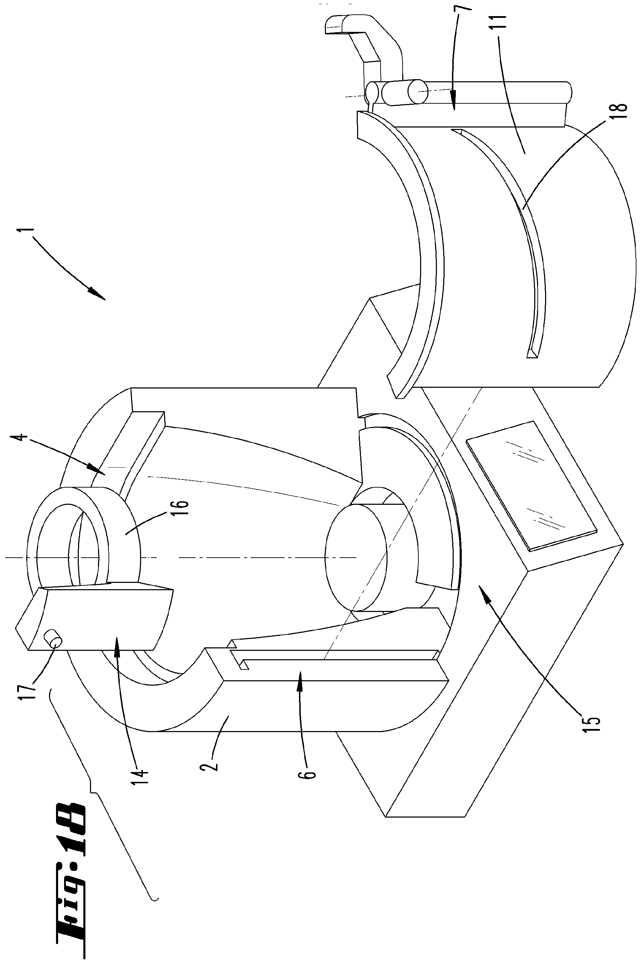

   - Figur 18:: eine Explosionsdarstellung der Küchenmaschine,

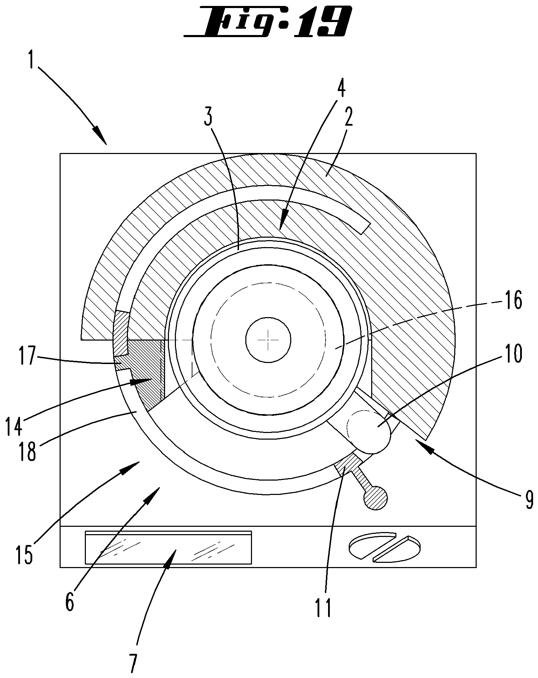

   - Figur 19:: einen horizontalen Querschnitt der Küchenmaschine,

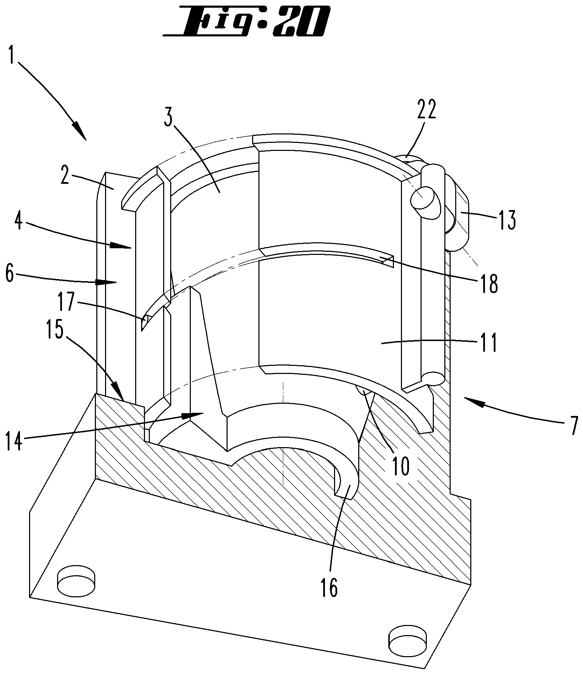

   - Figur 20:: eine perspektivische Unteransicht der Küchenmaschine mit einem geschlossenen Gefäßaufnahmebereich,

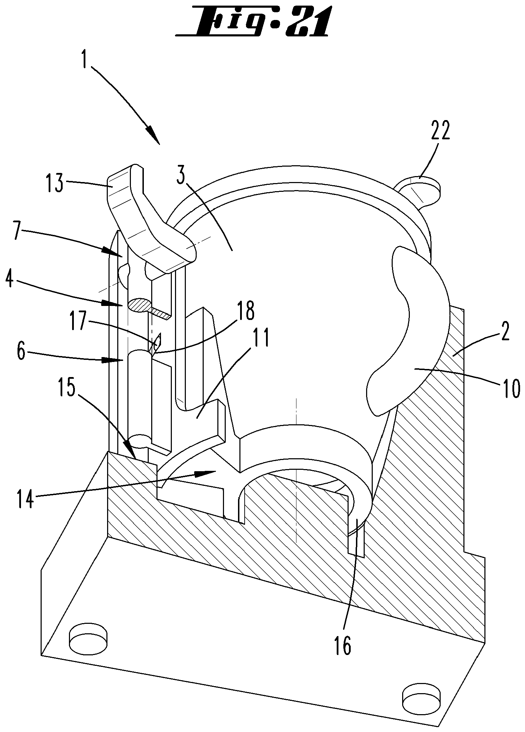

   - Figur 21:: eine perspektivische Unteransicht der Küchenmaschine mit einem geöffneten Gefäßaufnahmebereich;

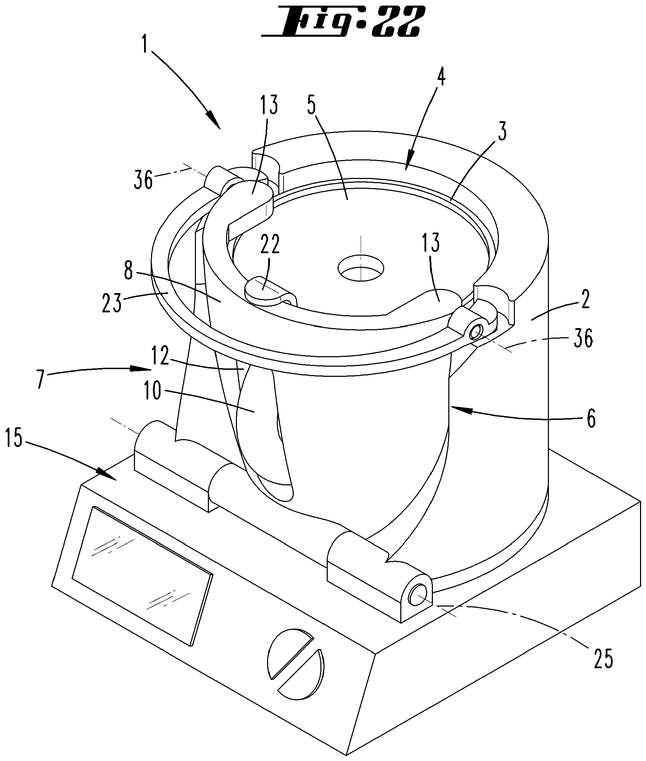

Figuren 22 bis 29 eine Küchenmaschine gemäß einer vierten Ausführungsform, nämlich:
   - Figur 22:: eine perspektivische Ansicht der Küchenmaschine,

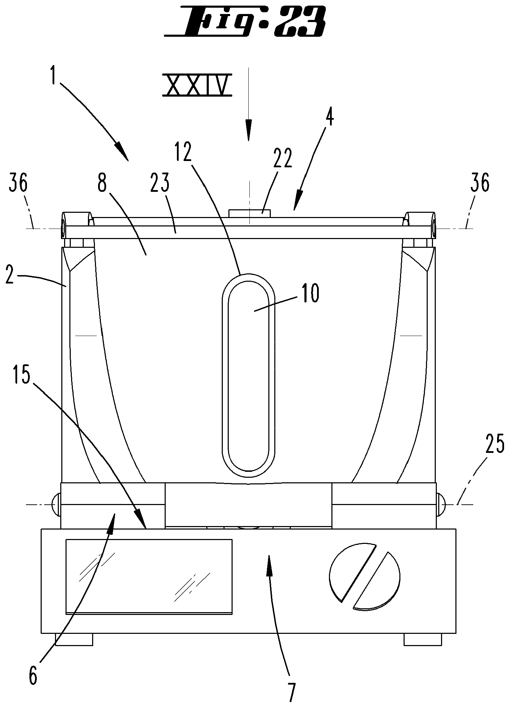

   - Figur 23:: eine Frontalansicht der Küchenmaschine,

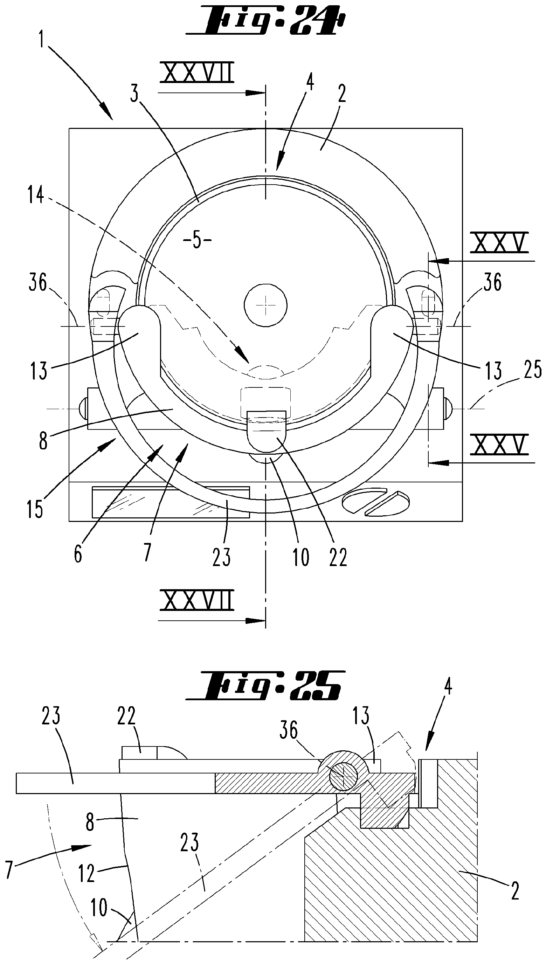

   - Figur 24:: eine Draufsicht der Küchenmaschine,
   - Figur 25:: eine Seitenansicht eines Teilbereiches der Küchenmaschine,

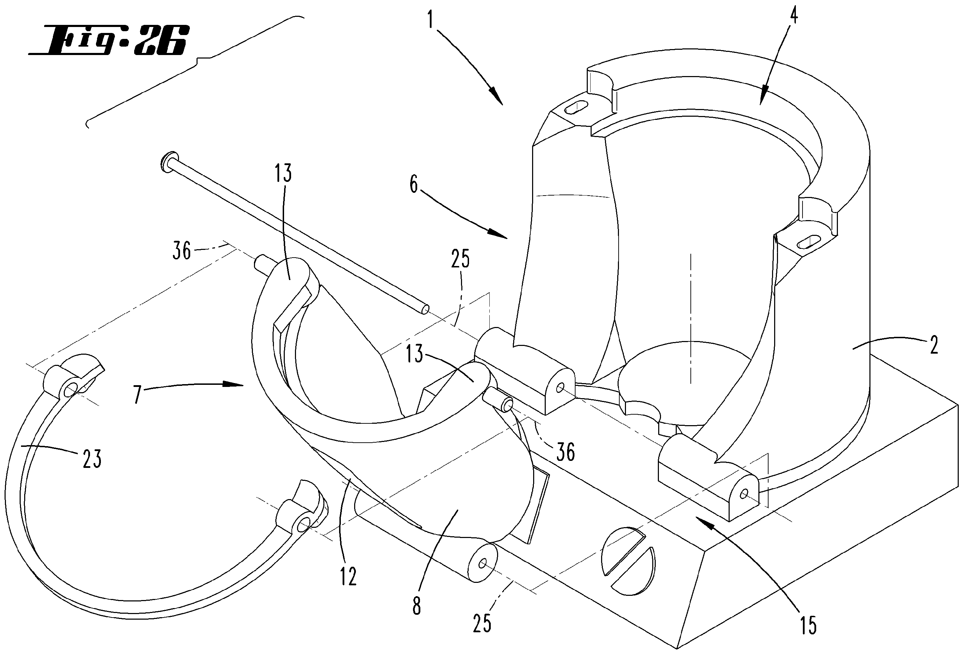

   - Figur 26:: eine Explosionsdarstellung der Küchenmaschine,

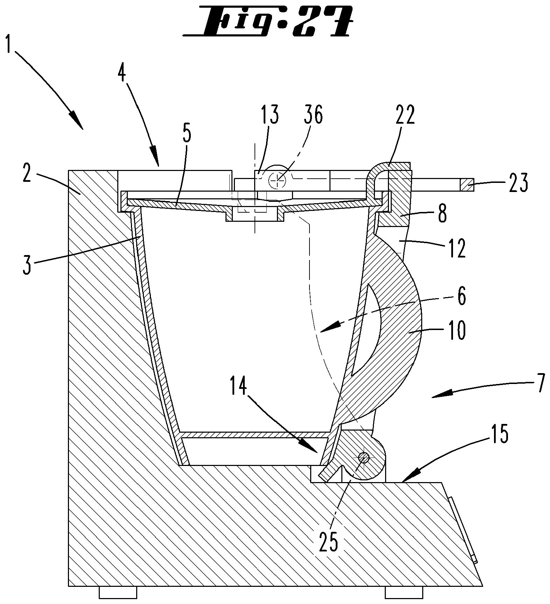

   - Figur 27:: einen vertikalen Querschnitt der Küchenmaschine,

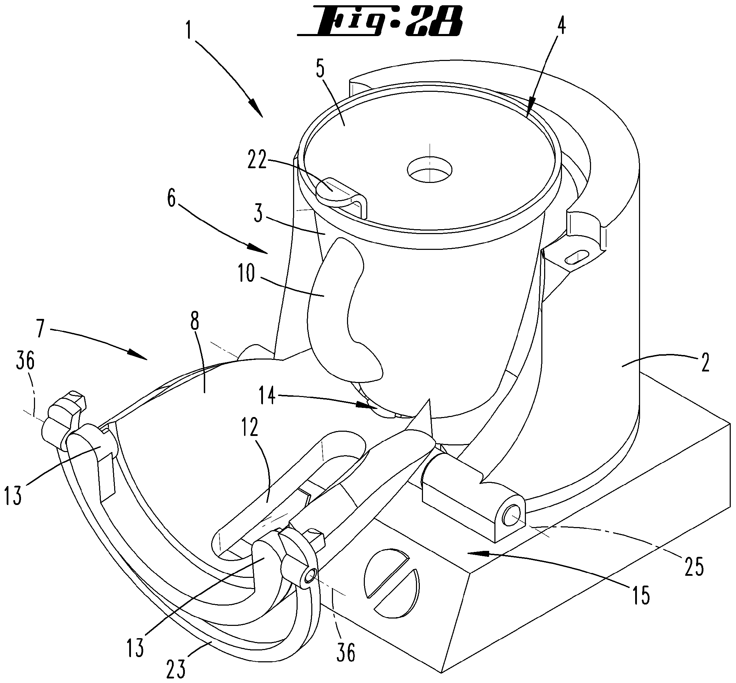

   - Figur 28:: eine perspektivische Ansicht der Küchenmaschine mit einem geöffneten Gefäßaufnahmebereich;

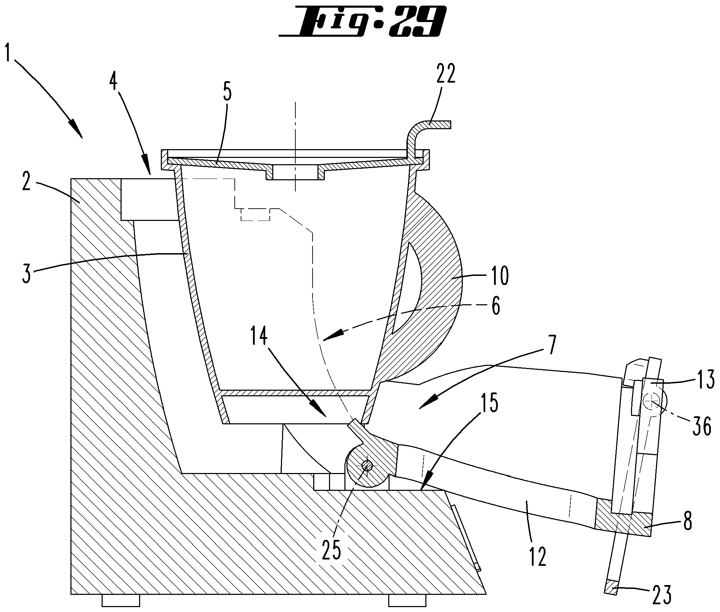

   - Figur 29:: einen vertikalen Querschnitt der Küchenmaschine mit einem geöffneten Gefäßaufnahmebereich;

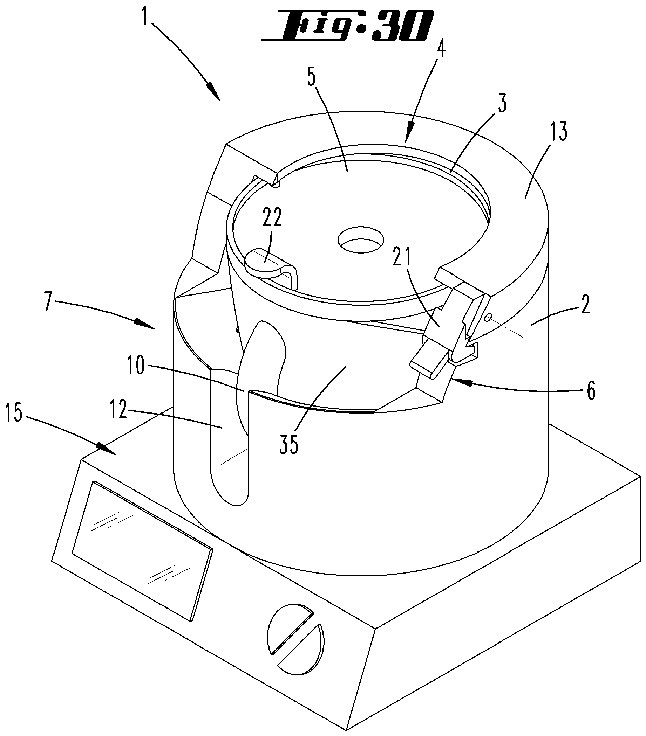

Figuren 30 bis 40 eine Küchenmaschine gemäß einer fünften Ausführungsvariante, nämlich:
   - Figur 30:: eine perspektivische Ansicht der Küchenmaschine,

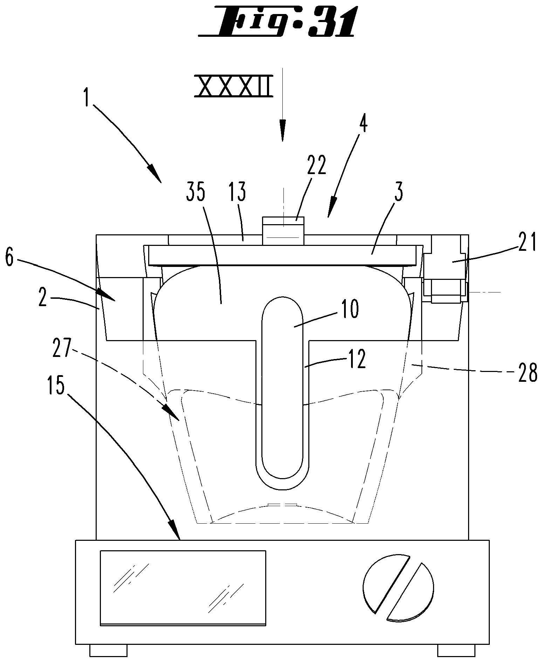

   - Figur 31:: eine Frontalansicht der Küchenmaschine,

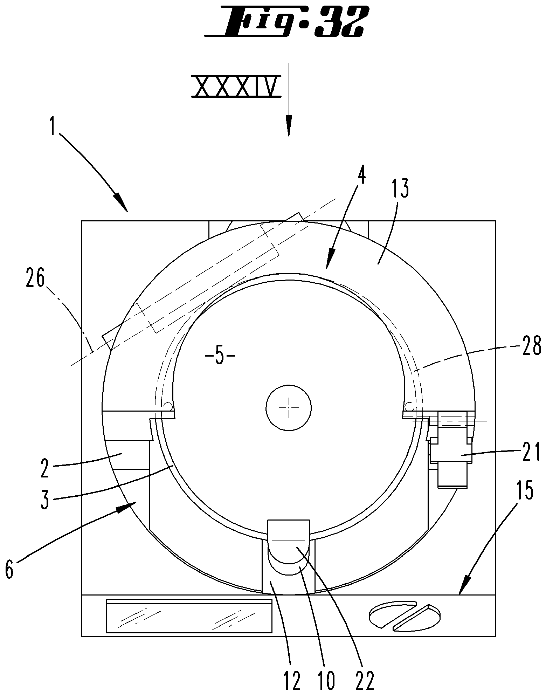

   - Figur 32:: eine Draufsicht der Küchenmaschine,

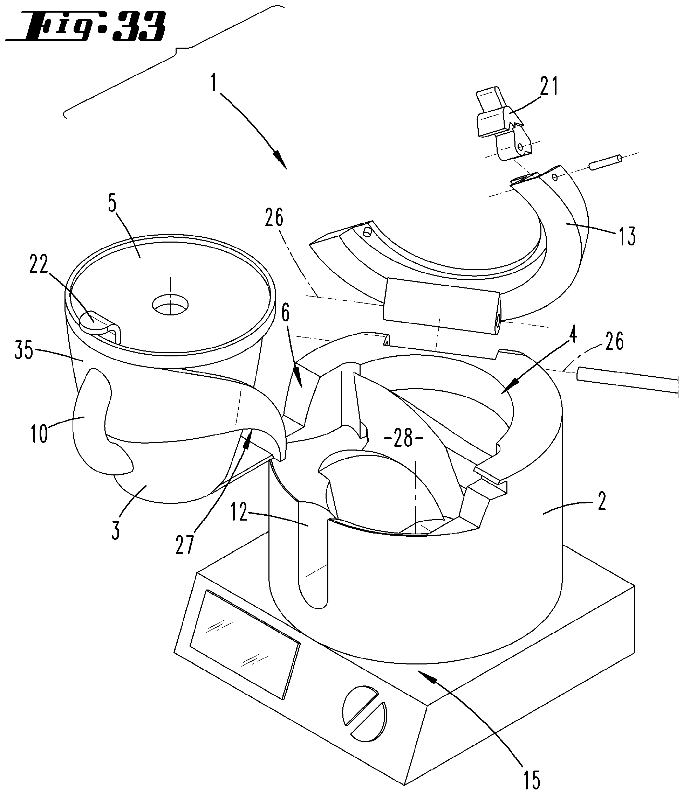

   - Figur 33:: eine Explosionsdarstellung der Küchenmaschine,

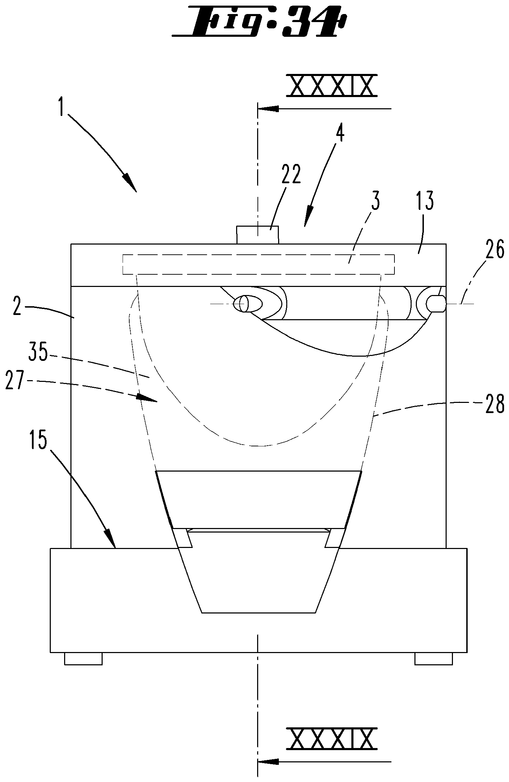

   - Figur 34:: einen vertikalen Querschnitt der Küchenmaschine in einer Rückansicht,

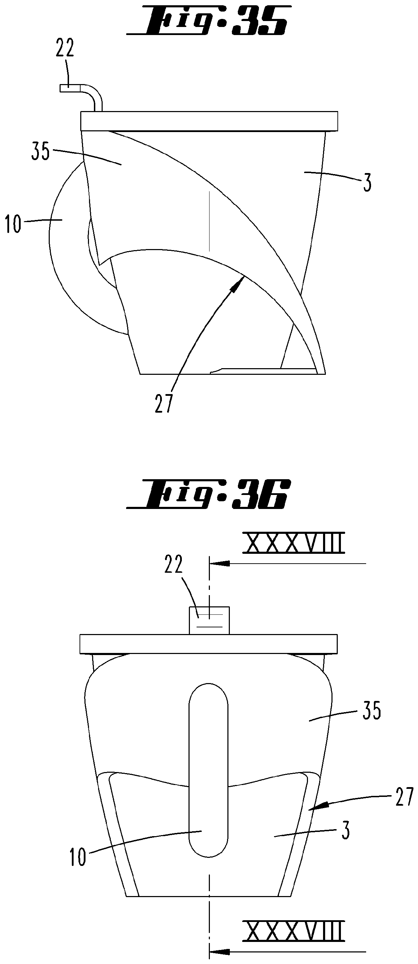

   - Figur 35:: ein Gefäß in Seitenansicht,
   - Figur 36:: das Gefäß in Frontalansicht,

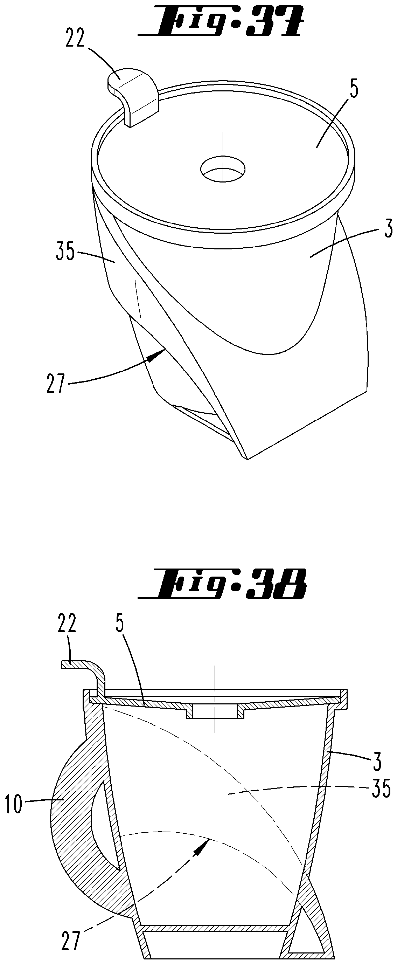

   - Figur 37:: das Gefäß in perspektivischer Ansicht,
   - Figur 38:: ein vertikaler Querschnitt durch das Gefäß,

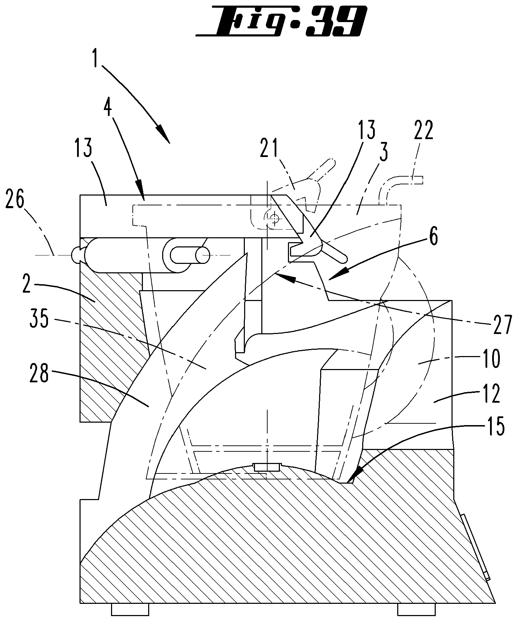

   - Figur 39:: ein vertikaler Querschnitt der Küchenmaschine,

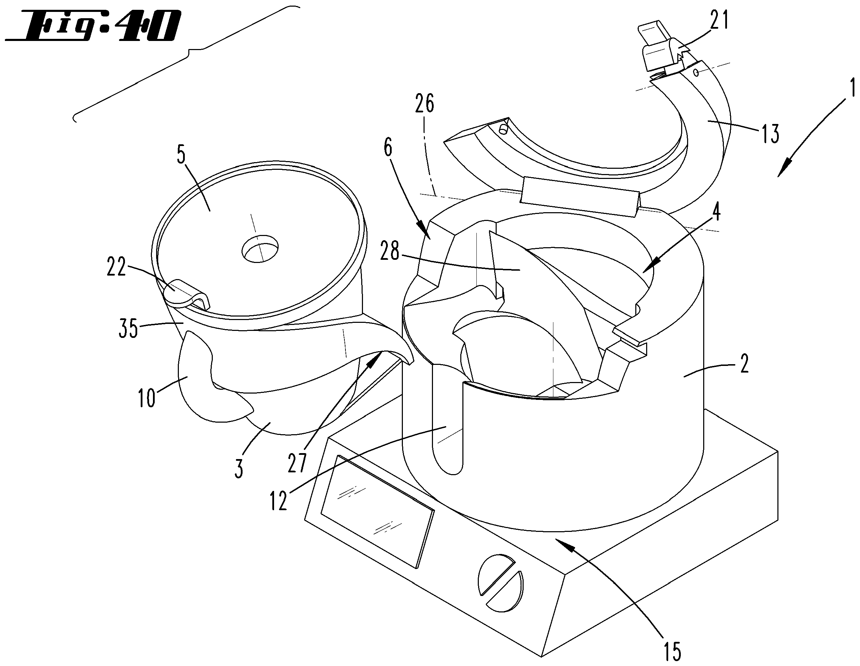

   - Figur 40:: eine perspektivische Ansicht der Küchenmaschine mit einem geöffneten Gefäßaufnahmebereich;

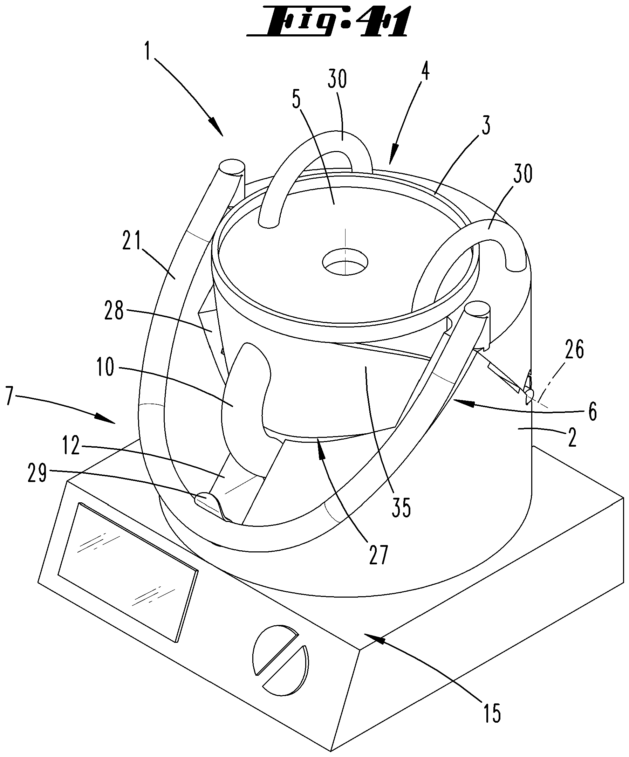

Figuren 41 bis 48 eine Küchenmaschine gemäß einer sechsten Ausführungsvariante, nämlich:
   - Figur 41:: eine perspektivische Ansicht der Küchenmaschine,

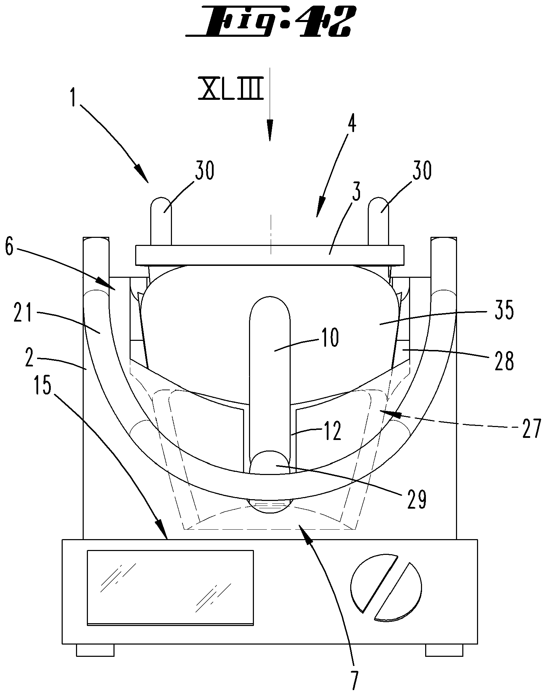

   - Figur 42:: eine Frontalansicht der Küchenmaschine,

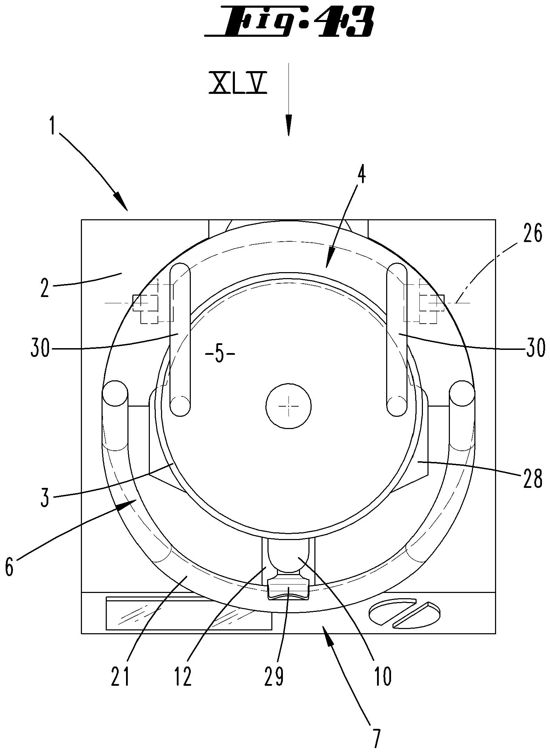

   - Figur 43:: eine Draufsicht der Küchenmaschine,

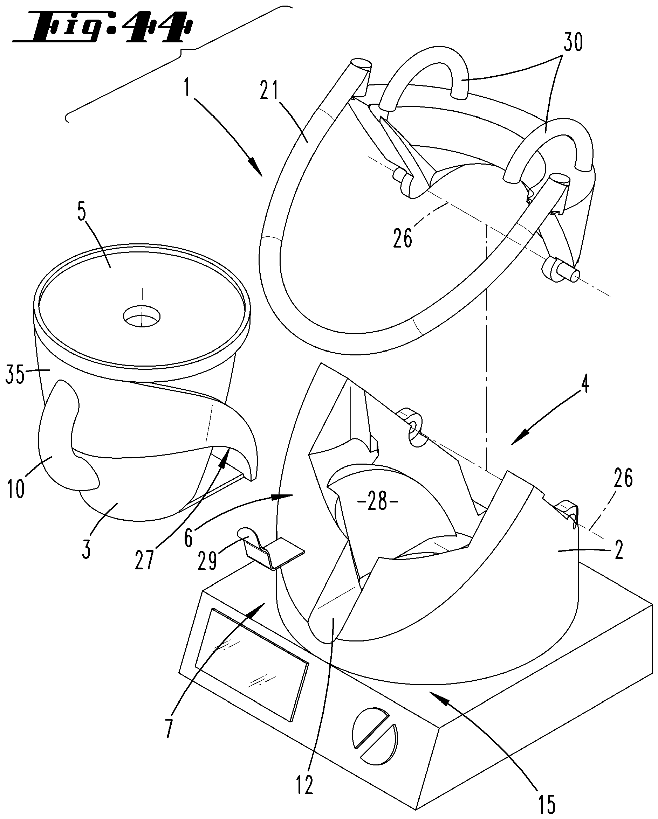

   - Figur 44:: eine Explosionsdarstellung der Küchenmaschine,

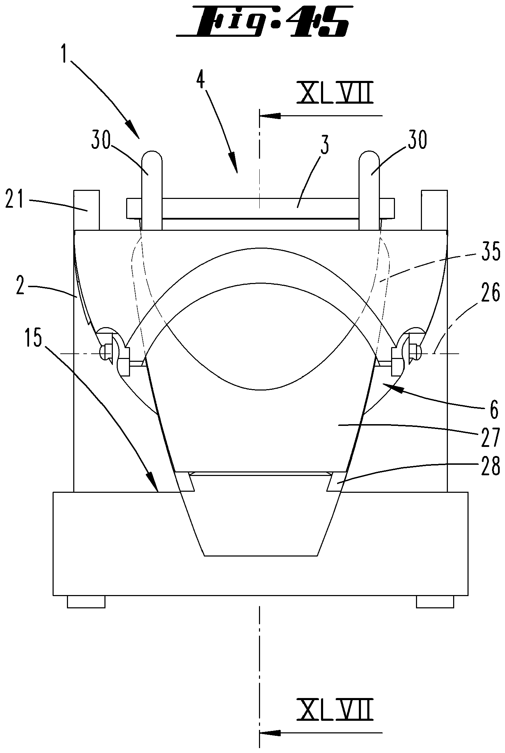

   - Figur 45:: einen vertikalen Querschnitt der Küchenmaschine in einer Rückansicht,

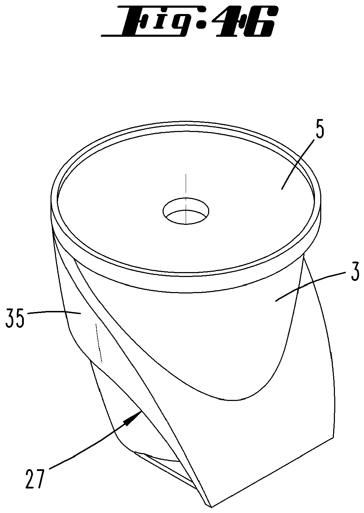

   - Figur 46:: ein Gefäß in perspektivischer Ansicht,

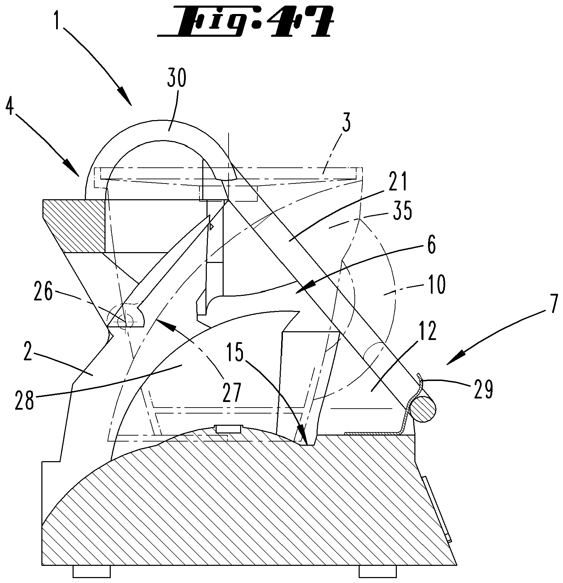

   - Figur 47:: ein vertikaler Querschnitt der Küchenmaschine,

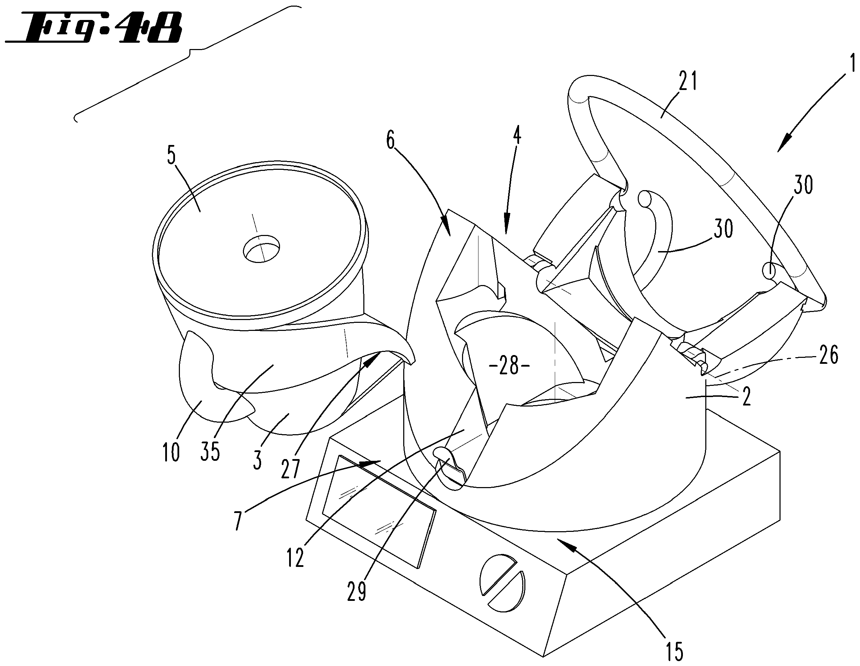

   - Figur 48:: eine perspektivische Ansicht der Küchenmaschine mit einem geöffneten Gefäßaufnahmebereich,

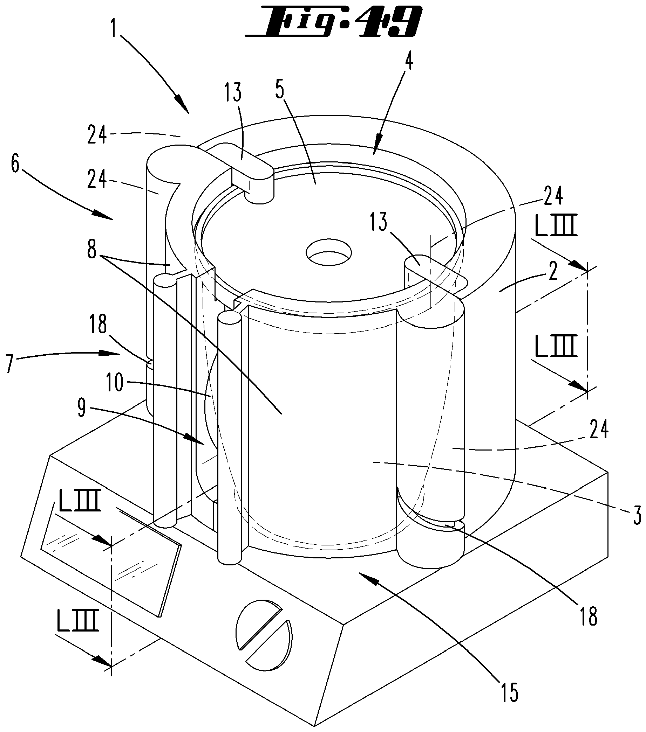

Figuren 49 bis 53 eine Küchenmaschine gemäß einer siebten Ausführungsvariante, nämlich:
   - Figur 49:: eine perspektivische Ansicht der Küchenmaschine,

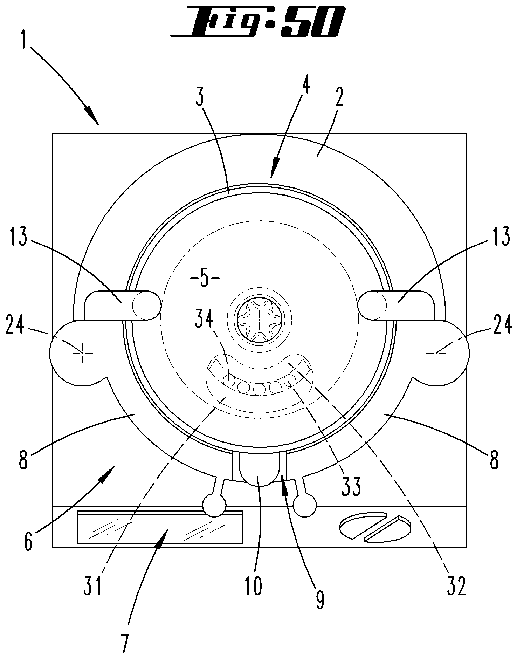

   - Figur 50:: eine Draufsicht der Küchenmaschine,

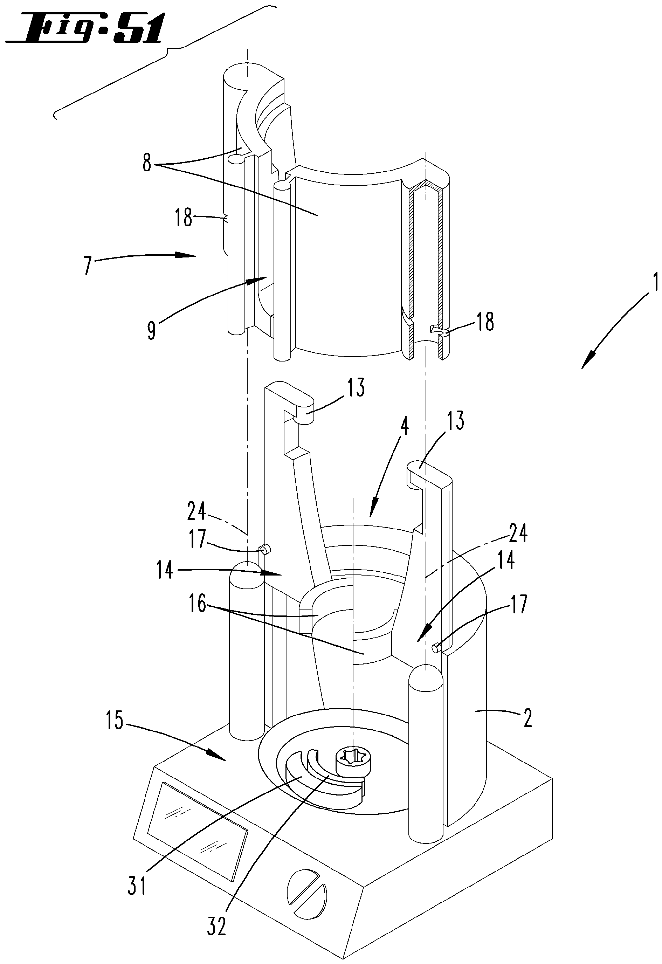

   - Figur 51:: eine Explosionsdarstellung der Küchenmaschine,

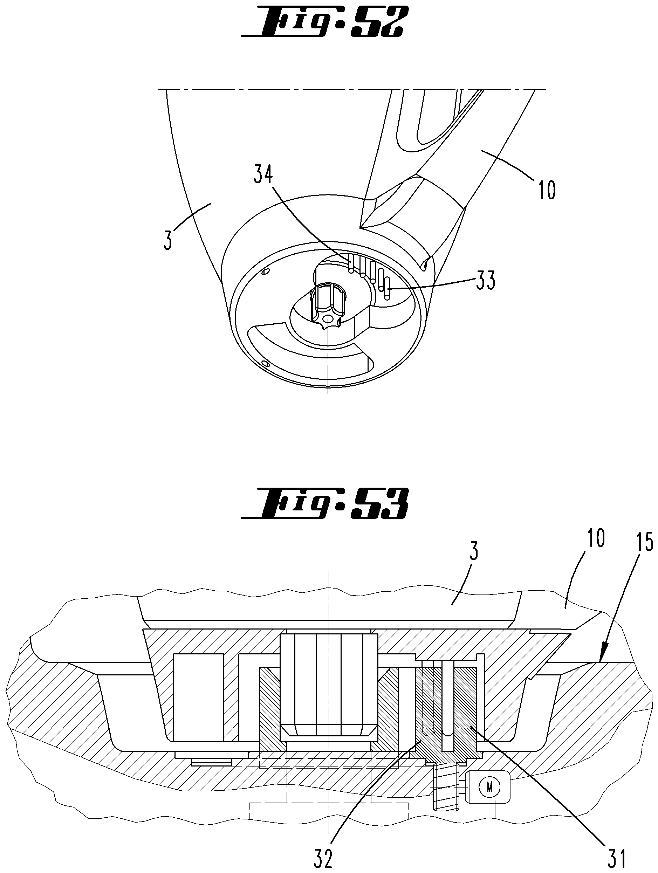

   - Figur 52:: ein Teilbereich eines Gefäßes in Unteransicht,
   - Figur 53:: ein vertikaler Querschnitt durch einen Teilbereich des Gefäßes.

Die Figuren zeigen eine vereinfacht dargestellte Küchenmaschine 1. Die gezeigte Form der Küchenmaschine 1 ist lediglich beispielhaft zu verstehen und somit nicht beschränkend für die Erfindung. Die Küchenmaschine 1 kann beispielsweise ein Standmixgerät zur Zubereitung von Speisen sein. Die Küchenmaschine 1 weist ein Gehäuse 2 auf, an welchem ein Gefäß 3 angeordnet werden kann. Zu diesem Zweck ist in dem Gehäuse 2 ein Gefäßaufnahmebereich 4 ausgebildet. Sofern es sich bei der Küchenmaschine 1 um ein Mixgerät handelt, kann dem Gefäßaufnahmebereich 4 ein Rührwerk und gegebenenfalls eine Heizeinrichtung zugeordnet sein. Darüber hinaus weist das Gehäuse 2 der Küchenmaschine 1 in üblicher Weise Drehschalter, Drehknöpfe, ein Display, einen Netzanschluss und ähnliches auf.

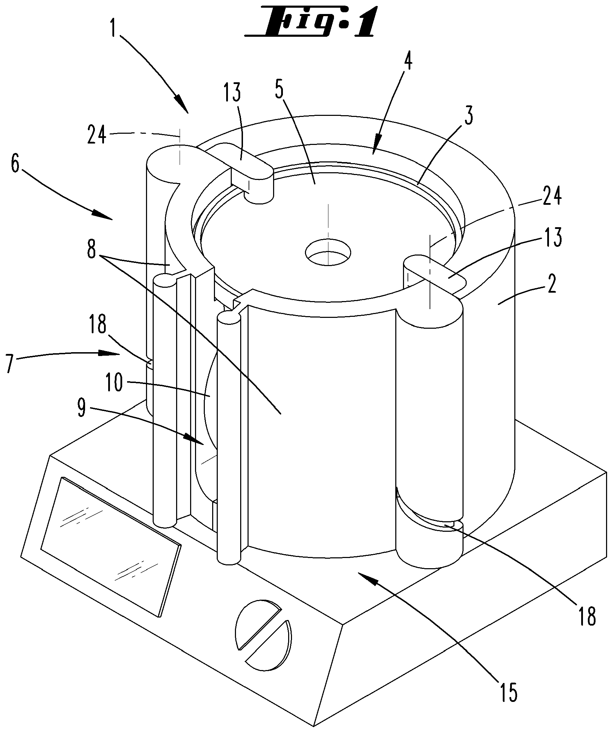

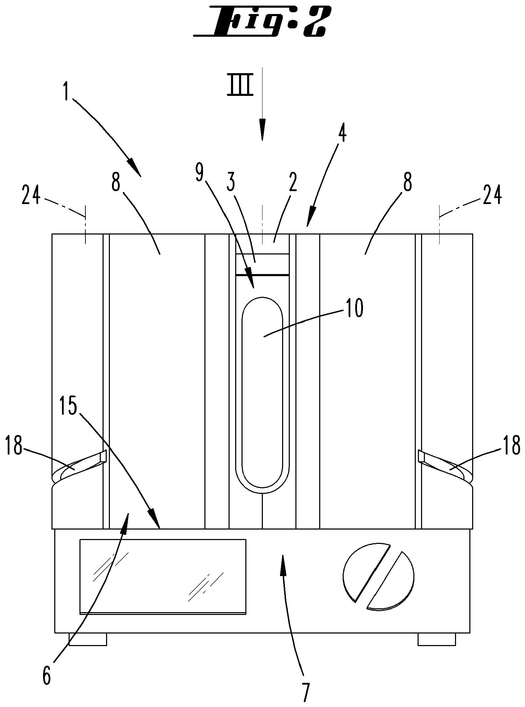

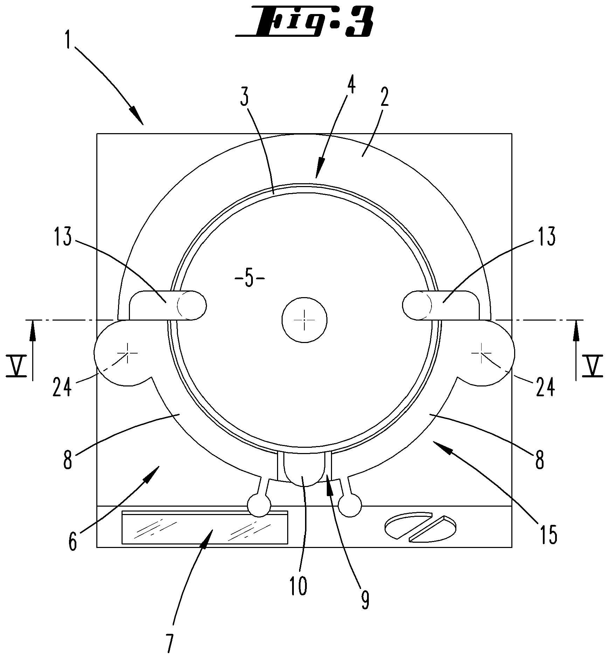

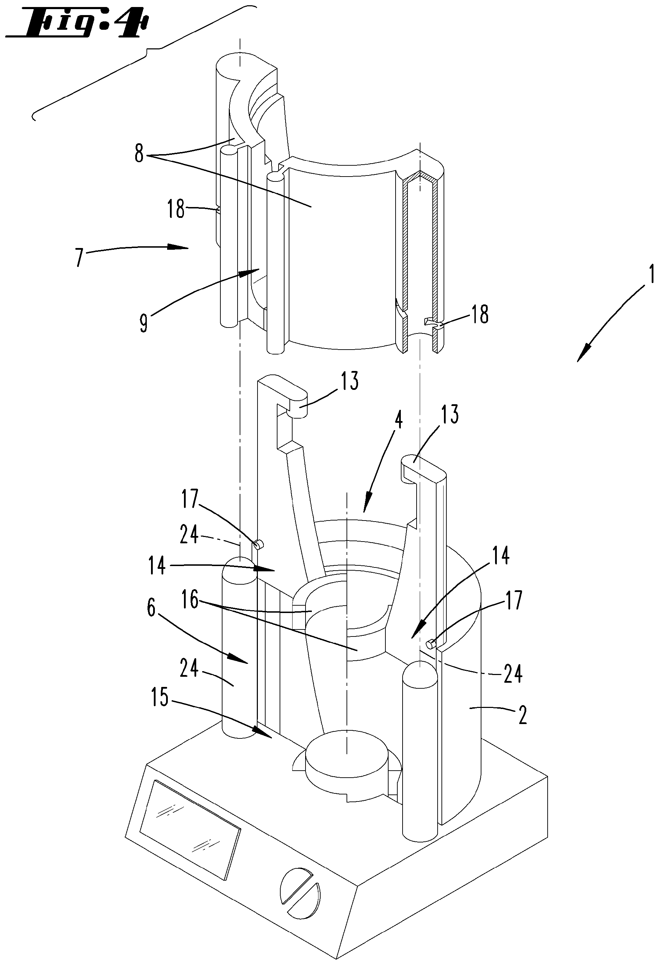

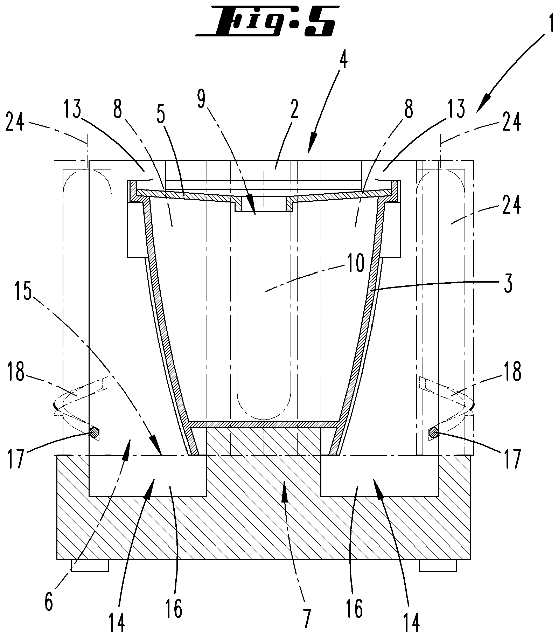

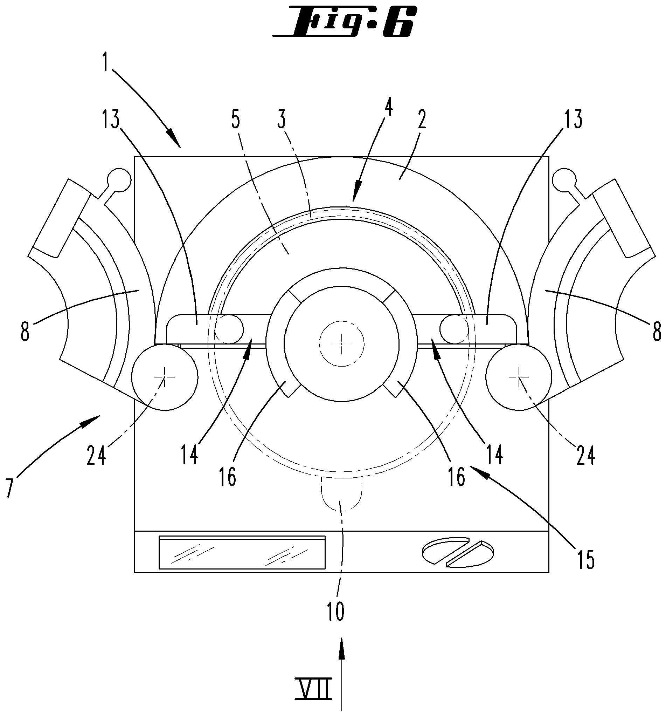

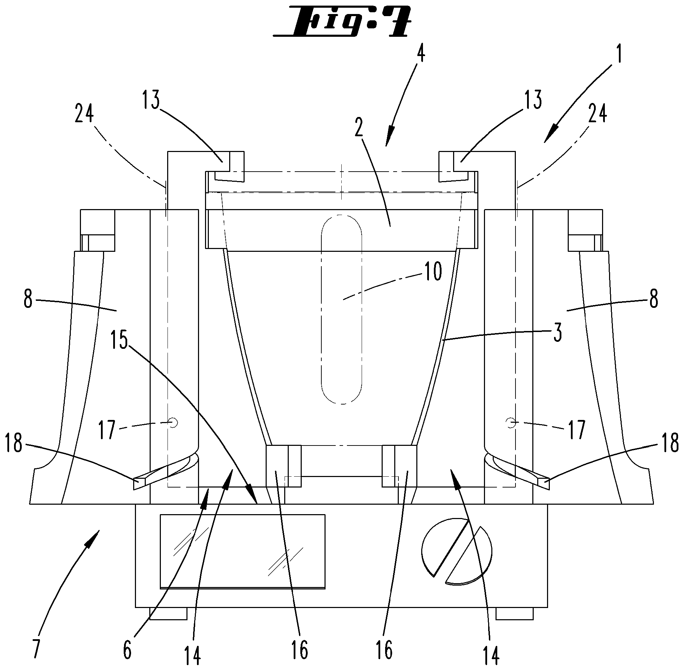

Gemäß dem ersten, in den Figuren 1 bis 7 gezeigten, Ausführungsbeispiel verfügt die Küchenmaschine 1 über ein Gehäuse 2 mit einem Gefäßaufnahmebereich 4. In den Gefäßaufnahmebereich 4 ist ein Gefäß 3 eingesetzt. Das Gefäß 3 ist mit einem Deckel 5 geschlossen. Um ein bequemes Einsetzen des Gefäßes 3 in den Gefäßaufnahmebereich 4 der Küchenmaschine 1 zu ermöglichen und dabei gleichzeitig das Gefäß 3 in Bezug auf eine vertikale Richtung als auch in Bezug auf eine Umfangsrichtung des Gefäßes 3 auszurichten, ist der Gefäßaufnahmebereich 4 im Wesentlichen als ein Zylinder ausgebildet, dessen Mantel in Umfangsrichtung eine Mantelaussparung 6 aufweist, welche durch mindestens eine Verschlusseinrichtung 7 verschließbar ist. Durch die Mantelaussparung 6 kann das Gefäß 3 bequem in den Gefäßaufnahmebereich 4 eingesetzt und aus diesem entnommen werden. Die Verschlusseinrichtung 7 weist in dem gezeigten Ausführungsbeispiel zwei Flügel 8 auf, welche in dem geschlossenen Zustand der Verschlusseinrichtung 7 einen Spalt 9 zwischen sich aufnehmen. Durch diesen Spalt 9 kann ein Griffelement 10, beispielsweise ein Henkel, des Gefäßes 3 hindurchragen. Die beiden Flügel 8 sind um jeweils eine vertikale Drehachse 24 verschwenkbar.

Dem Gefäßaufnahmebereich 4 ist eine Hebeeinrichtung 14 zugeordnet, welche in Wirkverbindung mit der Verschlusseinrichtung 7, d. h. einem oder beiden Flügeln 8, steht. Die Hebeeinrichtung 14 weist eine in einem Bodenbereich 15 des Gefäßaufnahmebereiches 4 angeordnete Hebebühne 16 auf, welche ein Eingreifelement 17, hier einen Vorsprung, aufweist. Das Eingreifelement 17 greift in eine korrespondierende gewindeartige Führung 18 der Verschlusseinrichtung 7 ein. Durch die Steigung der gewindeartigen Führung 18 der Verschlusseinrichtung 7 kommt es bei einem Verschwenken der Verschlusseinrichtung 7 um die vertikale Drehachse 24 zu einer Anhebung der Hebeeinrichtung 14, wodurch gleichzeitig die Hebebühne 16 der Hebeeinrichtung 14 angehoben wird. Die Hebebühne 16 weist in dem gezeigten Ausführungsbeispiel zwei Ringabschnitte auf, auf welche das Gefäß 3 gestellt ist. Es sind jedoch auch andere geometrische Formen der Hebebühne 16 denkbar. Die Hebeeinrichtung 14 weist zwei Verriegelungselemente 13 auf, welche in Wirkverbindung mit der Hebebühne 16 stehen und gleichzeitig mit der Hebebühne 16 abgesenkt bzw. angehoben werden. Bei einem Verschwenken der Flügel 8 in die Mantelaussparung 6 kommt es zu einem Absenken der Hebebühne 16, wodurch gleichzeitig auch die Verriegelungselemente 13 abgesenkt werden bis diese von außen auf den das Gefäß 3 verschließenden Deckel 5 drücken. Die Bewegung der Flügel 8 kann gekoppelt sein, so dass bei Betätigung eines der Flügel 8 der andere Flügel 8 gleichzeitig mit verschwenkt wird. Alternativ ist es jedoch auch möglich, dass die Flügel 8 unabhängig voneinander bewegbar sind.

In dem gezeigten Ausführungsbeispiel kommt es vorteilhaft bei einem Verschwenken der Flügel 8 in Richtung einer Schließbewegung des Gefäßaufnahmebereiches 4 aufgrund des in der Führung 18 der Verschlusseinrichtung 7 laufenden Eingreifelementes 17 zu einem Absenken der Hebeeinrichtung 14 mit der daran angeordneten Hebebühne 16 sowie den Verriegelungselementen 13. Gleichzeitig erfolgt ebenfalls eine Ausrichtung des Gefäßes 3 in dessen Umfangsrichtung, da das Griffelement 10 des Gefäßes bei dem Verschwenken der Flügel 8 an der Innenseite des nächstliegenden Flügels 8 entlang gleitet und in Richtung des zwischen den Flügeln 8 ausgebildeten Spaltes 9 verschoben wird. Sobald die Flügel 8 in der Mantelaussparung 6 des Gefäßaufnahmebereiches 4 angeordnet sind, greift das Griffelement 10 des Gefäßes 3 durch den Spalt 9. In dieser Orientierung ist das Gefäß 3 in einer definierten Position und Orientierung innerhalb des Gefäßaufnahmebereiches 4 der Küchenmaschine 1 angeordnet.

Alternativ zu der beschriebenen Wirkverbindung zwischen der Schwenkbewegung der Verschlusseinrichtung 7 und der Verriegelung des Deckels 5 auf dem Gefäß 3 können selbstverständlich auch die Hebeeinrichtung 14, die Verriegelungselemente 13 und die Flügel 8 voneinander unabhängig betätigt werden. Neben der erfindungsgemäßen Verriegelung bietet die gezeigte Ausbildung des Gefäßaufnahmebereiches 4 auch eine Schalldämmfunktion, da das Gefäß 3 in Umfangsrichtung vollständig von dem Gehäuse 2 der Küchenmaschine 1 umschlossen ist. Geräusche, welche durch die Zubereitung von Speisen innerhalb des Gefäßes 3 entstehen, werden optimal gedämmt, so dass die Küchenmaschine 1 im Betrieb besonders leise ist.

Die in den Figuren 8 bis 14 gezeigte Küchenmaschine 1 weist ebenfalls ein Gehäuse 2 mit einem Gefäßaufnahmebereich 4 auf, in welchen ein Gefäß 3 eingesetzt werden kann. An dem Gehäuse 2 sind ebenfalls zwei Flügel 8 angeordnet, welche um jeweils eine vertikale Drehachse 24 verschwenkbar sind. In einem in die Mantelaussparung 6 verschwenkten Zustand der Flügel 8 ist zwischen den Flügeln 8 ein Spalt 9 ausgebildet, durch welchen ein Griffelement 10 des Gefäßes 3 greifen kann. Die Flügel 8 weisen jeweils ein Verriegelungselement 13 auf, welches im geschlossenen Zustand des Gefäßaufnahmebereiches 4 auf den Deckel 5 des Gefäßes 3 drückt und das Gefäß 3 somit verriegelt.

Den Flügeln 8 ist eine Hebeeinrichtung 14 zugeordnet, welche miteinander wechselwirkende Bereiche sowohl in dem Gehäuse 2 der Küchenmaschine 1 als auch an den Flügeln 8 aufweist. Die Flügel 8 weisen jeweils ein Hebeelement 19 auf, welches an dem, dem Bodenbereich 15 des Gefäßaufnahmebereiches 4 zugewandten Ende des Flügels 8 angeordnet ist. Der Bodenbereich 15 des Gehäuses 2 weist eine Rampe 20 auf, entlang welcher ein Teilbereich des Hebeelementes 19 läuft. Bei einem Verschwenken des Flügels 8 von einer geöffneten Stellung des Gefäßaufnahmebereiches 4 in eine geschlossene Stellung läuft das Hebeelement 19 die Rampe 20 hinunter, wodurch es zu einem Absenken des Hebeelementes 19 kommt. Da das Gefäß 3 auf den Hebeelementen 19 der Flügel 8 angeordnet ist, kommt es gleichzeitig zu einem Absenken des Gefäßes 3 in den Gefäßaufnahmebereich 4. Gleichzeitig greifen die Verriegelungselemente 13 in der geschlossenen Stellung des Gefäßaufnahmebereiches 4 auf den Deckel 5 und verriegeln das Gefäß 3 mit dem Deckel 5. Bei der entsprechend entgegengesetzten Schwenkbewegung der Flügel 8 laufen die Hebeelemente 19 die Rampen 20 hinauf, so dass das auf den Hebeelementen 19 stehende Gefäß 3 angehoben wird. Bei der vollständigen Öffnung der Mantelaussparung 6 ist es dem Nutzer der Küchenmaschine 1 besonders bequem möglich, das Gefäß 3 aus dem Gehäuse 2 der Küchenmaschine 1 zu entnehmen.

Die Figuren 15 bis 21 zeigen eine dritte Ausführungsform der Erfindung, bei welcher die in dem Gehäuse 2 der Küchenmaschine 1 ausgebildete Mantelaussparung 6 durch eine Verschlusseinrichtung 7 nach der Art eines Schiebeelementes 11 verschlossen ist. Obwohl hier nur ein einziges Schiebeelement 11 gezeigt ist, kann die Erfindung durchaus auch mit zwei Schiebeelementen 11 ausgeführt sein. Das Schiebeelement 11 kann in dem geöffneten Zustand des Gefäßaufnahmebereiches 4 in einen Teilbereich des Gehäuses 2 der Küchenmaschine 1 eingeschoben sein. Die gezeigte Küchenmaschine 1 verfügt über eine Hebeeinrichtung 14, welche eine Hebebühne 16 für das Gefäß 3, eine gewindeartige Führung 18 innerhalb des Schiebeelementes 11 und ein in die Führung 18 eingreifendes Eingreifelement 17, welches in Wirkverbindung mit der Hebebühne 16 steht, aufweist. Die Hebebühne 16 ist in dem gezeigten Ausführungsbeispiel als ringförmiger Bereich dargestellt, auf welchen das Gefäß 3 gestellt werden kann. Durch die Wirkverbindung zwischen dem Schiebeelement 11 und der Hebebühne 16 kommt es bei einem Herausschieben des Schiebeelementes 11 aus der Mantelaussparung 6 zu einem Anheben der Hebebühne 16, so dass das Gefäß 3 in dem Gefäßaufnahmebereich 4 angehoben wird und somit für einen Nutzer der Küchenmaschine 1 besonders leicht zugänglich ist. An dem Schiebeelement 11 ist ein Verriegelungselement 13 angeordnet, welches von dem Nutzer der Küchenmaschine 1 manuell verschwenkt werden kann, so dass das Verriegelungselement 13 über den Rand des Gefäßes 3 greift und den Deckel 5 mit dem Gefäß 3 verriegeln kann. Darüber hinaus kann eine an dem Deckel 5 angeordnete Deckelnase 22 in Eingriff mit dem Verriegelungselement 13 stehen, beispielsweise um eine besondere Orientierung des Deckels 5 auf dem Gefäß 3 sicherzustellen und/oder die Bewegung des Deckels 5 in axiale und/oder Umfangsrichtung zu unterbinden.

Gemäß dieser Ausführungsvariante ist, ausgehend von der geschlossenen Stellung des Gefäßaufnahmebereiches 4, zwischen dem Schiebeelement 11 und dem Gehäuse 2 ein Spalt 9 ausgebildet, durch welchen ein Griffelement 10 des Gefäßes 3 hindurchgreifen kann. Dadurch kommt es bei einem Verschieben des Schiebeelementes 11 in die Mantelaussparung 6 zu einer Ausrichtung des Gefäßes 3 in dessen Umfangsrichtung. Um davon ausgehend das Gefäß 3 aus dem Gehäuse 2 der Küchenmaschine 1 entnehmen zu können, wird zuerst das Verriegelungselement 13 von dem Gefäß 3 bzw. dem Deckel 5 gelöst. Daraufhin wird das Schiebeelement 11 aus der Mantelaussparung 6 herausgeschoben (in der Figur 15 nach links). Durch die Schiebebewegung wird das Eingreifelement 17 der Hebeeinrichtung 14 innerhalb der Führung 18 des Schiebeelementes 11 nach oben bewegt. Dadurch kommt es zu einer Anhebung der Hebebühne 16, auf welcher das Gefäß 3 angeordnet ist. In der maximal geöffneten Stellung der Mantelaussparung 6 ist das Gefäß 3 somit gegenüber dem Gefäßaufnahmebereich 4 angehoben, so dass dieses aus dem Gehäuse 2 der Küchenmaschine 1 entnommen werden kann.

Die Figuren 22 bis 29 zeigen eine vierte Ausführungsform der Erfindung. Gemäß dieser Ausführungsform ist die Verschlusseinrichtung 7 als ein um eine horizontale Drehachse 25 schwenkbarer Flügel 8 ausgebildet. Der Flügel 8 weist eine Aussparung 12 auf, in welche ein Griffelement 10 des Gefäßes 2 einführbar ist. An dem Flügel 8 sind Verriegelungselemente 13 ausgebildet, welche in dem geschlossenen Zustand des Gefäßaufnahmebereiches 4 über den Rand des Gefäßes 3 greifen und das Gefäß 3 mit dem Deckel 5 verriegeln. Zusätzlich ist an dem Flügel 8 ein Zusatzelement 23 angeordnet, welches eine Verriegelung zwischen dem Flügel 8 und dem Gehäuse 2 der Küchenmaschine 1 bewirkt. Das Zusatzelement 23 ist um eine horizontal ausgerichtete Achse 36 verschwenkbar, wobei ein Teilbereich des Zusatzelementes 3 in einen korrespondierenden Teilbereich des Gehäuses 2 eingreifen kann. Beispielsweise kann das Zusatzelement 23 Vorsprünge aufweisen, welche in Aussparungen des Gehäuses 2 eingreifen können. Das Zusatzelement 23 ist vorteilhaft als Bügel ausgebildet, so dass der Nutzer der Küchenmaschine 1 das Zusatzelement 23 besonders komfortabel ergreifen kann und dadurch sowohl die Verriegelung zwischen dem Flügel 8 und dem Gehäuse 2 aufheben kann, als auch gleichzeitig den Flügel 8 in die geöffnete Position herabschwenken kann. An dem Flügel 8 ist eine Hebeeinrichtung 14 ausgebildet, hier konkret als hakenförmiger Vorsprung des Flügels 8. Das Gefäß 3 ist auf diese Hebeeinrichtung 14 stellbar, wobei bei einem Verschwenken des Flügels 8 gleichzeitig auch das Gefäß 3 mit angehoben oder abgesenkt wird.

Die Figuren 30 bis 40 zeigen eine fünfte Ausführungsform der Erfindung. Das Einsetzen bzw. Herausheben des Gefäßes 3 aus dem Gehäuse 2 der Küchenmaschine 1 erfolgt ausschließlich manuell durch den Nutzer der Küchenmaschine 1. Um das Einsetzen bzw. Herausheben des Gefäßes 3 aus dem Gehäuse 2 zu erleichtern, ist das Gehäuse 2 mit einer Mantelaussparung 6 versehen, so dass das Gefäß 3 zumindest über einen Umfangsbereich von ungefähr 180 Grad beispielsweise nur bis zur Hälfte seiner Höhe umfasst ist. Um die Position und Orientierung des Gefäßes 3 innerhalb des Gehäuses 2 der Küchenmaschine 1 vorgeben zu können, weist das Gefäß 3 einen Eingriffteilbereich 35 mit einer Gefäßführung 27 auf, welche mit einer Gehäuseführung 28 des Gehäuses 2 korrespondiert. Die Gefäßführung 27 kann rampenförmig an der Außenwandung des Gefäßes 3, nämlich dem Eingriffteilbereich 35, ausgebildet sein, insbesondere einstückig mit dem Gefäß 3 ausgebildet sein. Die besondere Form des Eingriffteilbereiches 35 und der Gefäßführung 27 sorgt dafür, dass das Gefäß 3 ausschließlich mit einer bestimmten Orientierung in das Gehäuse 2 eingeführt werden kann. Sofern das Gefäß 3 so gehalten wird, dass die Gefäßführung 27 nicht auf der Gehäuseführung 28 entlanggleiten kann, ist es dem Nutzer der Küchenmaschine 1 nicht möglich, das Gefäß 3 in den Gefäßaufnahmebereich 4 einzusetzen. Der Eingriffteilbereich 35 kann ebenfalls eine Schalldämmfunktion ausüben, um die bei der Zubereitung von Speisen innerhalb des Gefäßes 3 entstehenden Geräusche zu dämmen.

Sobald das Gefäß 3 mit der gewünschten Orientierung innerhalb des Gehäuses 2 positioniert ist, kann ein an dem Gehäuse 2 angeordnetes Verriegelungselement 13 das Gefäß 3 mit dem Deckel 5 verriegeln. Dazu ist das Verriegelungselement 13 um eine Achse 26 verschwenkbar an dem Gehäuse 2 angeordnet. Das Verriegelungselement 13 kontaktiert im verriegelten Zustand einen Teilbereich des Deckels 5 und drückt den Deckel 5 auf das Gefäß 3. In der gezeigten Ausführungsvariante ist das Verriegelungselement 13 um eine horizontal angeordnete, tangential zu dem Gefäß 3 verlaufende und in einem Winkel zu der Front der Küchenmaschine 1 verlaufende Achse 26 schwenkbar. Durch diese Ausgestaltung wird eine gleichmäßige Kraft auf den Deckel 5 ausgeübt. Das Verriegelungselement 13 kann zusätzlich einen Verriegelungsfortsatz 21 aufweisen, welcher mit einem Teilbereich des Gehäuses 2 in Wechselwirkung steht. Gegebenenfalls kann die Führung des Gefäßes 3 bei der Einführung in den Gefäßaufnahmebereich 4 durch zusätzliche Führungsbügel unterstützt werden, welche innerhalb des Gefäßaufnahmebereiches 4 angeordnet sind. Diese Führungsbügel können beispielsweise Metallbügel sein.

Die Figuren 41 bis 48 zeigen eine sechste Ausführungsform der Erfindung. Gemäß dieser Ausführungsvariante weist die Verriegelungseinrichtung einen an dem Gefäßaufnahmebereich 4 angeordneten, um eine horizontale Achse 26 schwenkbaren Verriegelungsbügel 37 mit Bügelfortsätzen 30 auf. Bei hochgeschwenktem Verriegelungsbügel 37 ist ein oberer Teilbereich des Gefäßes 3 vollständig zugänglich, so dass der Nutzer das Gefäß 3 besonders einfach aus dem Gehäuse 2 der Küchenmaschine 1 entnehmen kann. An dem Verriegelungsbügel 37 sind die Bügelfortsätze 30 angeordnet, welche in dem verriegelten Zustand der Verriegelungseinrichtung auf den Deckel 5 drücken und somit das Gefäß 3 verriegeln.

Wie bereits zuvor in Bezug auf die fünfte Ausführungsvariante (Figuren 35 bis 38) beschrieben, weist das Gefäß 3 einen Eingriffteilbereich 35 mit einer rampenartigen Gefäßführung 27 auf, welche auf einer formkorrespondierenden Gehäuseführung 28 des Gehäuses 2 gleiten kann, so dass das Gefäß 3 automatisch in die gewünschte tiefste Position innerhalb des Gefäßaufnahmebereiches 4 eingeführt werden kann und gleichzeitig eine bestimmte Orientierung in Umfangsrichtung des Gefäßes 3 einnimmt. An dem Gehäuse 2, hier dem Bodenbereich 15, ist ein Federelement 29 angeordnet, in welches der Verriegelungsbügel 37 in dem verriegelten Zustand eingreifen kann. Das Federelement 29 kann beispielsweise ein Metallbügel sein, hinter welchen der Verriegelungsbügel 37 schnappen kann. Wie bereits zuvor vorgeschlagen, können auch gemäß dieser Ausführungsform Führungsbügel in dem Gefäßaufnahmebereich 4 angeordnet sein, welche beispielsweise als Blattfedern gegen das Gefäß 3 wirken und das Gefäß 3 positionieren und fixieren. Ebenfalls wird dadurch die Einführung des Gefäßes 3 in das Gehäuse 2 erleichtert.

Die Figuren 49 bis 53 zeigen schließlich eine siebte Ausführungsform der Erfindung. Gemäß dieser Ausführungsvariante weisen das Gefäß 3 und der Gefäßaufnahmebereich 4 der Küchenmaschine 1 korrespondierende elektrische Kontakte 31, 32, 33, 34 zur Herstellung einer elektrischen Verbindung zwischen der Küchenmaschine 1 und dem Gefäß 3 auf. Wie in Figur 51 gezeigt sind die elektrischen Kontakte 31, 32 des Gefäßaufnahmebereiches 4 jeweils teilkreisförmig ausgebildet. Die elektrischen Kontakte 31, 32 verlaufen parallel zueinander und nehmen einen Spaltbereich zwischen sich auf, in den die elektrischen Kontakte 33, 34 des Gefäßes 3 eingeführt werden können. Wie in Figur 52 dargestellt sind die elektrischen Kontakte 33, 34 des Gefäßes 3 beispielsweise als Stifte ausgebildet, hier insbesondere fünf Stifte, welche zwischen die elektrischen Kontakte 31, 32 des Gefäßaufnahmebereiches 4 verlagerbar sind.

Die Positionierung der elektrischen Kontakte 31, 32, 33, 34 zueinander ist beispielhaft anhand der Ausführungsform der Küchenmaschine 1 gemäß den Figuren 1 bis 7 dargestellt. Es ist jedoch auch möglich, eine erfindungsgemäße Positionierung der Kontakte 31, 32, 33, 34 entsprechend bei den weiteren zuvor dargestellten Ausführungsformen vorzunehmen.

Die elektrischen Kontakte 33, 34 des Gefäßes 3 können in Umfangsrichtung stufenlos zwischen den elektrischen Kontakten 31, 32 des Gefäßaufnahmebereiches 4 aufgenommen werden, so dass auch bei unterschiedlichen Rotationspositionen des Gefäßes 3 innerhalb des Gefäßaufnahmebereiches 4 eine elektrische Verbindung zwischen dem Gefäß 3 und dem Gefäßaufnahmebereich 4 hergestellt werden kann. Es ist lediglich erforderlich, dass die elektrischen Kontakte 33, 34 des Gefäßes 3 vollständig zwischen den elektrischen Kontakten 31, 32 des Gefäßaufnahmebereiches 4 aufgenommen sind. Insofern gibt der Winkelbereich, welchen die elektrischen Kontakte 31, 32 des Gefäßaufnahmebereiches 4 aufspannen, den Bereich einer möglichen Kontaktstellung zu den elektrischen Kontakten 33, 34 des Gefäßes 3 an.

Sofern ein Nutzer das Gefäß 3 in den Gefäßaufnahmebereich 4 der Küchenmaschine 1 (Figur 49) einsetzen möchte, verschwenkt er die beiden Flügel 8 der Verschlusseinrichtung 7 um die jeweils vertikalen Drehachsen 24 bis die Mantelaussparung 6 vollständig geöffnet ist. Daraufhin setzt der Nutzer das Gefäß 3, vorteilhaft aus einer horizontalen Richtung, in den Gefäßaufnahmebereich 4 ein. Durch die anschließende Verschwenkung der Flügel 8 in Richtung der Mantelaussparung 6 gleitet das Griffelement 10, hier ein Henkel, des Gefäßes 3 entlang der Innenwandung eines der Flügel 8. Durch die formkorrespondierende Ausbildung der Innenwandung des Flügels 8 und der Außenwandung des Gefäßes 3 bzw. des Griffelementes 10 gelangt das Griffelement 10 schließlich in den zwischen den Flügeln 8 freibleibenden Spalt 9. In dieser Orientierung ist das Gefäß 3 so zu dem Gehäuse 2 der Küchenmaschine 1 ausgerichtet, dass die elektrischen Kontakte 33, 34 des Gefäßes 3 die elektrischen Kontakte 31, 32 des Gefäßaufnahmebereiches 4 kontaktieren. Es kann nunmehr eine elektrische Verbindung zwischen dem Gefäß 3 und der Küchenmaschine 1 hergestellt werden.

Unabhängig von den hier dargestellten Ausführungsvarianten sind im Rahmen der Erfindung selbstverständlich auch Unterkombinationen zwischen Merkmalen der einzelnen Ausführungsvarianten möglich. Beispielsweise können die Ausgestaltungen des Gefäßes 3, des Gefäßaufnahmebereiches 4, des Deckels 5, der Verschlusseinrichtung 7, des Verriegelungselementes 13, der Hebeeinrichtung 14, des Verriegelungsbügels 37 usw. miteinander kombiniert werden, sofern dies im Sinne der Erfindung sinnvoll ist.

**Bezugszeichenliste**

| | | | |
|---|---|---|---|
| 1 | Küchenmaschine | 26 | Achse |
| 2 | Gehäuse | 27 | Gefäßführung |
| 3 | Gefäß | 28 | Gehäuseführung |
| 4 | Gefäßaufnahmebereich | 29 | Federelement |
| 5 | Deckel | 30 | Bügelfortsatz |
| 6 | Mantelaussparung | 31 | Elektrischer Kontakt |
| 7 | Verschlusseinrichtung | 32 | Elektrischer Kontakt |
| 8 | Flügel | 33 | Elektrischer Kontakt |
| 9 | Spalt | 34 | Elektrischer Kontakt |
| 10 | Griffelement | 35 | Eingriffteilbereich |
| 11 | Schiebeelement | 36 | Achse |
| 12 | Aussparung | 37 | Verriegelungsbügel |
| 13 | Verriegelungselement | | |
| 14 | Hebeeinrichtung | | |
| 15 | Bodenbereich | | |
| 16 | Hebebühne | | |
| 17 | Eingreifelement | | |
| 18 | Führung | | |
| 19 | Hebeelement | | |
| 20 | Rampe | | |
| 21 | Verriegelungsfortsatz | | |
| 22 | Deckelnase | | |
| 23 | Zusatzelement | | |
| 24 | Vertikale Drehachse | | |
| 25 | Horizontale Drehachse | | |

## Patentansprüche

1. Küchenmaschine (1), insbesondere Mixgerät, mit einem Gehäuse (2), an welchem ein Gefäß (3) anordenbar ist, wobei das Gehäuse (2) einen Gefäßaufnahmebereich (4) aufweist, in welchen das Gefäß (3) einsetzbar ist, wobei der Gefäßaufnahmebereich (4) zumindest in einem Teilbereich formkorrespondierend zu dem Gefäß (3) so ausgebildet ist, dass das Gefäß (3) im Zuge des Einsetzens in den Gefäßaufnahmebereich (4) sowohl in Bezug auf eine vertikale Richtung als auch in Bezug auf eine Umfangsrichtung des Gefäßes (3) ausrichtbar ist, **dadurch gekennzeichnet, dass** der Gefäßaufnahmebereich (4) im Wesentlichen als ein Zylinder ausgebildet ist, dessen Zylindermantel eine Mantelaussparung (6) aufweist, so dass der Zylinder in Umfangsrichtung im Wesentlichen halbseitig offen ausgebildet ist, wobei an dem Gehäuse (2) eine mindestens einen schwenkbaren Flügel (8) oder mindestens ein in Umfangsrichtung verschiebbares Schiebeelement (11) aufweisende Verschlusseinrichtung (7) angeordnet ist, wobei der schwenkbare Flügel (8) formkorrespondierend in die Mantelaussparung (6) schwenkbar ist oder wobei das Schiebelement (11) formkorrespondierend in die Mantelaussparung (6) schiebbar ist.

2. Küchenmaschine (1) nach Anspruch 1, **dadurch gekennzeichnet, dass** die Verschlusseinrichtung (7) einen um eine vertikale Drehachse (24) schwenkbaren Flügel (8) oder zwei um jeweils eine vertikale Drehachse (24) schwenkbare Flügel (8) aufweist.

3. Küchenmaschine (1) nach Anspruch 2, **dadurch gekennzeichnet, dass** in Bezug auf einen in die Mantelaussparung (6) geschwenkten Zustand des Flügels (8) ein Spalt (9) zwischen dem Flügel (8) und dem Gefäßaufnahmebereich (4) oder zwischen zwei Flügeln (8) ausgebildet ist, in welchem Spalt (9) ein Teilbereich, insbesondere ein Griffelement (10), des Gefäßes (3) anordenbar ist.

4. Küchenmaschine (1) nach Anspruch 1, **dadurch gekennzeichnet, dass** in Bezug auf einen in die Mantelaussparung (6) geschobenen Zustand des Schiebeelementes (11) ein Spalt (9) zwischen dem Schiebeelement (11) und dem Gefäßaufnahmebereich (4) oder zwischen zwei Schiebelementen (11) ausgebildet ist, in welchem Spalt (9) ein Teilbereich, insbesondere ein Griffelement (10), des Gefäßes (3) anordenbar ist.

5. Küchenmaschine (1) nach Anspruch 1, **dadurch gekennzeichnet, dass** die Verschlusseinrichtung (7) einen um eine horizontale Drehachse (25) schwenkbaren Flügel (8) aufweist.

6. Küchenmaschine (1) nach Anspruch 5, **dadurch gekennzeichnet, dass** der Flügel (8) eine Aussparung (12) aufweist, in welcher ein Teilbereich, insbesondere ein Griffelement (10), des Gefäßes (3) anordenbar ist.

7. Küchenmaschine (1) nach einem der vorhergehenden Ansprüche, **dadurch gekennzeichnet, dass** die Verschlusseinrichtung (7) in Wirkverbindung mit einer Hebeeinrichtung (14) steht oder eine Hebeeinrichtung (14) aufweist, welche ausgebildet ist, ein in den Gefäßaufnahmebereich (4) eingesetztes Gefäß (3) bei Betätigung der Verschlusseinrichtung (7) entgegen einer Einsetzrichtung anzuheben und/oder ein in den Gefäßaufnahmebereich (4) einzusetzendes Gefäß (3) in Einsetzrichtung abzusenken.

8. Küchenmaschine (1) nach Anspruch 7, **dadurch gekennzeichnet, dass** die Hebeeinrichtung (14) eine in einem Bodenbereich (15) des Gefäßaufnahmebereiches (4) angeordnete Hebebühne (16) aufweist, welche Hebebühne (16) ein Eingreifelement (17) aufweist, das in eine gewindeartige Führung (18) der Verschlusseinrichtung (7) eingreift.

9. Küchenmaschine (1) nach Anspruch 7, **dadurch gekennzeichnet, dass** die Verschlusseinrichtung (7) ein Hebeelement (19) aufweist, welches so in Wirkverbindung mit einer an dem Gehäuse (2) ausgebildeten Rampe (20) steht, dass das Hebeelement (19) bei einer Betätigung der Verschlusseinrichtung (7) entlang der Rampe (20) bewegbar ist.

10. Küchenmaschine (1) nach einem der vorhergehenden Ansprüche, **dadurch gekennzeichnet, dass** die Verschlusseinrichtung (7) in Wirkverbindung mit einer Verriegelungseinrichtung zur Verriegelung des Gefäßes (3) mit einem Deckel (5) steht oder Teil einer Verriegelungseinrichtung ist, insbesondere Verriegelungselemente (13) zur Anordnung an dem Deckel (5) aufweist.

11. Küchenmaschine (1), insbesondere Mixgerät, mit einem Gehäuse (2), an welchem ein Gefäß (3) anordenbar ist, wobei das Gehäuse (2) einen Gefäßaufnahmebereich (4) aufweist, in welchen das Gefäß (3) einsetzbar ist, wobei der Gefäßaufnahmebereich (4) zumindest in einem Teilbereich formkorrespondierend zu dem Gefäß (3) so ausgebildet ist, dass das Gefäß (3) im Zuge des Einsetzens in den Gefäßaufnahmebereich (4) sowohl in Bezug auf eine vertikale Richtung als auch in Bezug auf eine Umfangsrichtung des Gefäßes (3) ausrichtbar ist, **dadurch gekennzeichnet, dass** der Gefäßaufnahmebereich (4) im Wesentlichen als ein Zylinder ausgebildet ist, dessen Zylindermantel eine Mantelaussparung (6) aufweist, so dass der Zylinder in Umfangsrichtung im Wesentlichen halbseitig offen ausgebildet ist, wobei das Gefäß (3) einen formkorrespondierend zu der Mantelaussparung (6) ausgebildeten Eingriffteilbereich (35) aufweist, welcher eine größere Materialstärke aufweist als die übrigen Teilbereiche des Gefäßes (3) in Umfangsrichtung, wobei der Eingriffteilbereich (35) die Mantelaussparung (6) im eingesetzten Zustand des Gefäßes (3) verschließt.

12. Küchenmaschine (1) nach Anspruch 11, **gekennzeichnet durch** eine Verriegelungseinrichtung zur Verriegelung des Gefäßes (3) mit einem Deckel (5), wobei die Verriegelungseinrichtung einen an dem Gehäuse (2) angeordneten, um eine horizontale Achse (26) schwenkbaren Verriegelungsbügel (21) aufweist, welcher im verriegelten Zustand einen Teilbereich des Deckels (5) kontaktiert.

13. Küchenmaschine (1) nach einem der vorhergehenden Ansprüche, **dadurch gekennzeichnet, dass** das Gefäß (3) und der Gefäßaufnahmebereich (4) elektrische Kontakte (31, 32, 33, 34) zum Herstellen einer elektrischen Verbindung zwischen dem Gefäß (3) und der Küchenmaschine (1) aufweisen, wobei das Gefäß (3) im Zuge des Einsetzens in den Gefäßaufnahmebereich (4) relativ zu dem Gehäuse (2) so ausrichtbar ist, dass die elektrischen Kontakte (31, 32) des Gefäßes (3) und die elektrischen Kontakte (33, 34) des Gefäßaufnahmebereiches (4) einander kontaktieren.

## Claims

1. A kitchen appliance (1), in particular a mixer, comprising a housing (2), on which a vessel (3) can be arranged, wherein the housing (2) has a vessel receiving area (4), into which the vessel (3) can be inserted, wherein the vessel receiving area (4) is embodied so as to correspond to the shape of the vessel (3) at least in a partial area in such a manner that the vessel (3) can be oriented with regard to a vertical direction as well as with regard to a circumferential direction of the vessel (3) in the course of the insertion into the vessel receiving area (4), **characterized in that** the vessel receiving area (4) is substantially embodied as a cylinder, the cylinder jacket of which has a jacket recess (6), so that the cylinder is embodied so as to be substantially open on one side in circumferential direction, wherein a closing device (7), which has at least one pivotable wing (8) or at least one sliding element (11), which can be shifted in circumferential direction, is arranged on the housing (2), wherein the pivotable wing (8) can be pivoted into the jacket recess (6) so as to correspond to the shape thereof, or wherein the sliding element (11) can be slid into the jacket recess (6) so as to correspond to the shape thereof.

2. The kitchen appliance (1) according to claim 1, **characterized in that** the closing device (7) has a wing (8), which can be pivoted about a vertical axis of rotation (24) or two wings (8), which can in each case be pivoted about a vertical axis of rotation (24).

3. The kitchen appliance (1) according to claim 2, **characterized in that**, with regard to a state of the wing (8), in which it is pivoted into the jacket recess (6), a gap (9) is embodied between the wing (8) and the vessel receiving area (4) or between two wings (8), in which gap (9) a partial area, in particular a hand grip element (10) of the vessel (3), can be arranged.

4. The kitchen appliance (1) according to claim 1, **characterized in that**, with regard to a state of the sliding element (11), in which it is slid into the jacket recess (6), a gap (9) is embodied between the sliding element (11) and the vessel receiving area (4) sliding element (11) and the vessel receiving area (4) or between two sliding elements (11), in which gap (9) or between two sliding elements (11), in which gap (9) a partial area, in particular a hand grip element (10) of the vessel (3), can be arranged.

5. The kitchen appliance (1) according to claim 1, **characterized in that** the closing device (7) has a wing (8), which can be pivoted about a horizontal axis of rotation (25).

6. The kitchen appliance (1) according to claim 5, **characterized in that** the wing (8) has a recess (12), in which a partial area, in particular a hand grip element (10) of the vessel (3), can be arranged.

7. The kitchen appliance (1) according to one of the preceding claims, **characterized in that** the closing device (7) is in operative connection with a lifting device (14) or has a lifting device (14), which is embodied to lift a vessel (3), which is inserted into the vessel receiving (4) area, in response to the actuation of the closing device (7) opposite an insertion direction and/or to lower a vessel (3), which is to be inserted into the vessel receiving area (4), in insertion direction.

8. The kitchen appliance (1) according to claim 7, **characterized in that** the lifting device (14) has a lifting platform (16), which is arranged in a bottom area (15) of the vessel receiving area (4), which lifting platform (16) has an engagement element (17), which engages with a thread-like guide (18) of the closing device (7).

9. The kitchen appliance (1) according to claim 7, **characterized in that** the closing device (7) has a lifting element (19), which is in operative connection with a ramp (20), which is embodied on the housing (3), in such a manner that the lifting element (19) can be moved along the ramp (20) in response to an actuation of the closing device (7).

10. The kitchen appliance (1) according to one of the preceding claims, **characterized in that** the closing device (7) is in operative connection with a locking device for locking the vessel (3) by means of a lid (5) or is part of a locking device, in particular has locking elements (13) for arrangement on the lid (5).

11. A kitchen appliance (1), in particular a mixer, comprising a housing (2), on which a vessel (3) can be arranged, wherein the housing (2) has a vessel receiving area (4), into which the vessel (3) can be inserted, wherein the vessel receiving area (4) is embodied so as to correspond to the shape of the vessel (3) at least in a partial area in such a manner that the vessel (3) can be oriented with regard to a vertical direction as well as with regard to a circumferential direction of the vessel (3) in the course of the insertion into the vessel receiving area (4), **characterized in that** the vessel receiving area (4) is substantially embodied as a cylinder, the cylinder jacket of which has a jacket recess (6), so that the cylinder is embodied so as to be substantially open on one side in circumferential direction, wherein the vessel (3) has a partial engagement area (35), which is embodied so as to correspond to the shape of the jacket recess (6) and which has a larger material thickness than the other partial areas of the vessel (3) in circumferential direction, wherein the partial engagement area (35) closes the jacket recess (6) in the inserted state of the vessel (3).

12. The kitchen appliance (1) according to claim 11, **characterized by** a locking device for locking the vessel (3) by means of a lid (5), wherein the locking device has a locking bracket (21), which is arranged on the housing (2) and which can be pivoted about a horizontal axis (26) and which, in the locked state, contacts a partial area of the lid (5).

13. The kitchen appliance (1) according to one of the preceding claims, **characterized in that** the vessel (3) and the vessel receiving area (4) have electric contacts (31, 32, 33, 34) for establishing an electric connection between the vessel (3) and the kitchen appliance (1), wherein, in the course of being inserted into the vessel receiving area (4), the vessel (3) can be oriented relative to the housing (2) in such a manner that the electric contacts (31, 32) of the vessel (3) and the electric contacts (33, 34) of the vessel receiving area (4) contact one another.

## Revendications

1. Robot de cuisine (1), en particulier mixeur, comprenant un boitier (2) auquel peut être associée une cuve (3), dans lequel le boitier (2) présente une région de réception de cuve (4) dans laquelle la cuve (3) peut être insérée, dans lequel au moins une partie de la région de réception de cuve (4) est réalisée en correspondance de forme avec la cuve (3) de manière à ce que, lors de l'insertion dans la région de réception de cuve (4), la cuve (3) soit apte à être positionnée aussi bien en référence à une direction verticale qu'en référence à une direction circonférentielle de la cuve (3), **caractérisé en ce que** la région de réception de cuve (4) est réalisée sensiblement sous la forme d'un cylindre dont l'enveloppe cylindrique présente un évidement d'enveloppe (6) de manière à ce que le cylindre soit sensiblement ouvert sur un côté en direction circonférentielle, dans lequel un dispositif de fermeture (7) est agencé sur le boîtier (2) lequel dispositif de fermeture (7) présente au moins une aile pivotante (8) ou au moins un élément coulissant (11) apte à coulisser dans la direction circonférentielle, dans lequel l'aile pivotante (8) est apte à être pivotée en correspondance de forme dans l'évidement d'enveloppe (6) ou dans lequel l'élément coulissant (11) est apte à être coulissé en correspondance de forme dans l'évidement d'enveloppe (6).

2. Robot de cuisine (1) selon la revendication 1, **caractérisé en ce que** le dispositif de fermeture (7) présente une aile (8) apte à pivoter autour d'un axe vertical (24) ou deux ailes (8) aptes à pivoter chacune autour d'un axe vertical (24).

3. Robot de cuisine (1) selon la revendication 2, **caractérisé en ce que**, en référence à un état dans lequel l'aile (8) a été pivotée dans l'évidement d'enveloppe (6), il est formé un espace (9) entre l'aile (8) et la région de réception de cuve (4) ou entre deux ailes (8), dans lequel espace (9) est susceptible d'être placée une partie de la cuve (3), en particulier un organe de préhension (10).

4. Robot de cuisine (1) selon la revendication 1, **caractérisé en ce que**, en référence à un état dans lequel l'élément coulissant (11) a été coulissé dans l'évidement d'enveloppe (6), il est formé un espace (9) entre l'élément coulissant (11) et la région de réception de cuve (4) ou entre deux éléments coulissants (11), dans lequel espace (9) est susceptible d'être placée une partie de la cuve (3), en particulier un organe de préhension (10).

5. Robot de cuisine (1) selon la revendication 1, **caractérisé en ce que** le dispositif de fermeture (7) présente une aile (8) pivotante autour d'un axe horizontal (25).

6. Robot de cuisine (1) selon la revendication 5, **caractérisé en ce que** l'aile présente un évidement (12) dans lequel est susceptible d'être placée une partie de la cuve (3), en particulier un organe de préhension (10).

7. Robot de cuisine (1) selon l'une des revendications précédentes, **caractérisé en ce que** le dispositif de fermeture (7) est en liaison fonctionnelle avec un dispositif de levage (14) ou présente un dispositif de levage (14), lequel dispositif de levage (14) est conçu pour lever une cuve (3) insérée dans la région de réception de cuve (4) en direction opposée à une direction d'insertion et/ou abaisser dans la direction d'insertion une cuve (3) à insérer dans la région de réception de cuve (4).

8. Robot de cuisine (1) selon la revendication 7, **caractérisé en ce que** le dispositif de levage (14) présente une plate-forme de levage (16) agencée dans la zone du fond (15) de la région de réception de cuve (4), laquelle plate-forme de levage (16) présente un élément d'engagement (17) qui engage un guidage analogue à un filetage.

9. Robot de cuisine (1) selon la revendication 7, **caractérisé en ce que** le dispositif de fermeture (7) présente un élément de levage (19) lequel est en liaison fonctionnelle avec une rampe (20) formée sur le boitier (2) de manière à ce que l'élément de levage (19) puisse se déplacer le long de la rampe (20) lors d'un actionnement du dispositif de fermeture (7).

10. Robot de cuisine (1) selon l'une des revendications précédentes, **caractérisé en ce que** le dispositif de fermeture (7) est en liaison fonctionnelle avec un dispositif de verrouillage pour verrouiller la cuve (3) avec un couvercle (5) ou constitue une partie d'un dispositif de verrouillage, en particulier présente des éléments de verrouillage (13) pour association avec le couvercle (5).

11. Robot de cuisine (1), en particulier mixeur, comprenant un boitier (2) auquel peut être associé une cuve (3), dans lequel le boitier (2) présente une région de réception de cuve (4) dans laquelle la cuve (3) peut être insérée, dans lequel au moins une partie de la région de réception de cuve (4) est réalisée en correspondance de forme avec la cuve (3) de manière à ce que, lors de l'insertion dans la région de réception de cuve (4), la cuve (3) soit apte à être positionnée aussi bien en référence à une direction verticale qu'en référence à une direction circonférentielle de la cuve (3), **caractérisé en ce que** la région de réception de cuve (4) est réalisée sensiblement sous la forme d'un cylindre dont l'enveloppe cylindrique présente un évidement d'enveloppe (6) de manière à ce que le cylindre soit sensiblement ouvert sur un côté en direction circonférentielle, dans lequel la cuve (3) présente une partie d'engagement réalisée en correspondance de forme avec l'évidement d'enveloppe (6), laquelle partie d'engagement présente une épaisseur de matériau supérieure aux autres parties de la cuve (3) suivant la direction circonférentielle, dans lequel, dans l'état inséré de la cuve (3), la partie d'engagement (35) obture l'évidement d'enveloppe (6).

12. Robot de cuisine (1) selon la revendication 11, **caractérisé par** un dispositif de verrouillage pour verrouiller la cuve (3) avec un couvercle (5), dans lequel le dispositif de verrouillage présente un étrier de verrouillage (21) agencé pivotant autour d'un axe horizontal (26) sur le boitier (2), lequel étrier de verrouillage (21) à l'état verrouillé vient en contact avec une partie du couvercle (5).

13. Robot de cuisine (1) selon l'une des revendications précédentes, **caractérisé en ce que** la cuve (3) et la région de réception de cuve (4) présentent des contacts électriques (31, 32, 33, 34) pour établir une liaison électrique entre la cuve (3) et le robot de cuisine (1), dans lequel, lors de l'insertion de la cuve (3) dans la région de réception de cuve (3), la cuve (3) est apte à être positionnée relativement au boîtier (2) de manière à ce que les contacts électriques (31, 32) de la cuve (3) et les contacts électriques (33, 34) de la région de réception de cuve (4) entrent en contact.
